# EUROPÄISCHE PATENTANMELDUNG

(11) **EP 2 592 297 A1**
(43) Veröffentlichungstag der Anmeldung: **15.05.2013**
(21) Anmeldenummer: 11188942.4
(22) Anmeldetag: 14.11.2011
(51) Int. Cl.: F16D 43/12

(54) **Fliehkrafteinheit und Kupplung**

(71) Anmelder: ZF Friedrichshafen AG, 88038 Friedrichshafen (DE)
(72) Erfinder: Wittholz, Jan, 97506 Grafenrheinfeld (DE)

(57) **Zusammenfassung**

Eine Fliehkrafteinheit (130) für eine Kupplung (100) eines Kraftfahrzeugs gemäß einem Ausführungsbeispiel umfasst ein erstes Bauteil (430), ein zweites Bauteil (440), das drehfest mit dem ersten Bauteil (430) gekoppelt ist, wobei das erste Bauteil (430) und das zweite Bauteil (440) derart ausgebildet sind, dass sich ein Abstand zwischen dem ersten Bauteil (430) und dem zweiten Bauteil (440) entlang einer axialen Richtung (110) bei Überschreiten einer Grenzdrehzahl vergrößert, und ein Rückstellfederelement (450), das eine Kraft zwischen dem ersten Bauteil (430) und dem zweiten Bauteil (440) derart bewirkt, dass der Abstand zwischen dem ersten Bauteil (430) und dem zweiten Bauteil (440) bei einem Stillstand der Fliehkrafteinheit (130) einen Ruhewert annimmt, wobei das zweite Bauteil (440) ausgebildet ist, um mit einer Kupplungsscheibe (160) der Kupplung (100) eine mechanische Verbindung zur Übertragung eines Drehmoments zu schaffen, wobei das erste Bauteil (430) ausgebildet ist, um mit einem anpresskrafterzeugenden Element (230) der Kupplung (100) in Kontakt zu stehen oder in Kontakt gebracht zu werden.

## Beschreibung

Ausführungsbeispiele beziehen sich auf eine Fliehkrafteinheit und eine Kupplung, wie sie beispielsweise im Kraftfahrzeugbereich und hier beispielsweise bei Personenkraftwagen sowie im Rennsport eingesetzt werden können.

Die Bedienung einer Kupplung eines Kraftfahrzeugs wird von vielen Fahrern als Belastung, zumindest jedoch als lästig empfunden. Insbesondere bei einem Anfahren, bei dem bei einer konventionellen Trockenkupplung der Schleifpunkt der Kupplung kurzfristig gehalten werden muss, hat bei Fahrern immer wieder das Bedürfnis geweckt, die Bedienung der Kupplung automatisiert erfolgen zu lassen. Gerade in diesem Bereich wurden daher bereits in den 50er-Jahren des letzten Jahrhunderts Fliehkraftkupplungen eingesetzt. So wurde beispielsweise im sogenannten "Saxomat" eine zusätzliche Fliehkraftkupplung eingesetzt, bei der wälzgelagerte Fliehgewichte auf Rampen abrollen und so eine Unterbrechung des Kraftflusses zwischen Motor und Getriebe während des Stillstands des Kraftfahrzeugs ermöglicht haben.

Der Fahrer wird konventionell so über eine Fliehkraftkupplung entlastet, die das Fahrzeug automatisch einkuppelt. Konventionelle Fliehkraftkupplungen basieren hierbei beispielsweise auf radial öffnenden Backen oder Lamellenpaketen, die über Fliehkrafthebel betätigt werden.

Die DE 10 2004 030 280 A1 bezieht sich so auf eine Fliehkraftkupplung, bei der in einer Gehäuseanordnung über Rollelemente und eine als Hebelmechanik wirkende Membranfeder einer Anpressplatte gegen eine Kupplungsscheibe gepresst wird. Die Membranfeder ist hierbei im Inneren des Gehäuses der Fliehkraftkupplung angeordnet. Die in diesem Dokument beschriebene Fliehkraftkupplung ermöglicht jedoch beispielsweise keinen unmittelbaren Gangwechsel, da sich diese Fliehkraftkupplung nicht gezielt trennen lässt.

Ausgehend hiervon besteht daher ein Bedarf daran, eine Fliehkrafteinheit für eine Kupplung eines Kraftfahrzeugs zu schaffen, welche ein gezieltes Trennen der Kupplung, beispielsweise für einen Gangwechsel, ermöglicht. Ebenso besteht ein entsprechender Bedarf, eine Kupplung zu schaffen, die einerseits ein gezieltes Trennen der Kupplung für einen Gangwechsel ermöglicht, andererseits jedoch auch durch ein automatisches Einkuppeln beim Anfahren den Fahrer entlastet.

Diesem Bedarf trägt eine Fliehkrafteinheit für eine Kupplung eines Kraftfahrzeugs gemäß Patentanspruch 1 und eine Kupplung für ein Kraftfahrzeug gemäß Patentanspruch 12 Rechnung.

Ein Fliehkrafteinheit für eine Kupplung eines Kraftfahrzeugs gemäß einem Ausführungsbeispiel umfasst ein erstes Bauteil, ein zweites Bauteil, das bezogen auf eine axiale Richtung drehfest mit dem ersten Bauteil gekoppelt ist, wobei das erste Bauteil und das zweite Bauteil derart ausgebildet sind, dass sich ein Abstand zwischen dem ersten Bauteil und dem zweiten Bauteil entlang der axialen Richtung bei Überschreiten einer Grenzdrehzahl ausgehend von einem Ruhewert bei einem Stillstand der Fliehkrafteinheit vergrößert, und ein Rückstellfederelement, das eine Kraft zwischen dem ersten Bauteil und dem zweiten Bauteil derart bewirkt, dass der Abstand zwischen dem ersten Bauteil und dem zweiten Bauteil bei dem Stillstand der Fliehkrafteinheit den Ruhewert annimmt. Das zweite Bauteil ist hierbei ausgebildet, um mit einer Kupplungsscheibe der Kupplung eine mechanische Verbindung zur Übertragung eines Drehmoments zu schaffen, wobei das erste Bauteil ausgebildet ist, um mit einem anpresskrafterzeugenden Element der Kupplung in Kontakt zu stehen oder in Kontakt gebracht zu werden, sodass durch die Vergrößerung des Abstands zwischen dem ersten Bauteil und dem zweiten Bauteil durch das anpresskrafterzeugende Element die mechanische Verbindung zu der Kupplungsscheibe geschaffen oder verstärkt wird.

Eine Kupplung für ein Kraftfahrzeug gemäß einem Ausführungsbeispiel umfasst eine Kupplungsscheibe, eine solche Fliehkrafteinheit gemäß Ausführungsbeispiel, ein anpresskrafterzeugendes Element, das so ausgebildet ist, dass bei der Vergrößerung des Abstands des ersten Bauteils von dem zweiten Bauteil der Fliehkrafteinheit eine Anpresskraft entlang der axialen Richtung auf die Fliehkrafteinheit und die Kupplungsscheibe ausgeübt wird, sodass das Drehmoment übertragbar ist, ein Gehäusekorb, der mit dem anpresskrafterzeugenden Element und der Fliehkrafteinheit drehfest verbunden ist, und eine Ausrückeinheit, die derart angeordnet und ausgebildet ist, sodass durch die Ausrückeinheit eine von dem anpresskrafterzeugenden Element ausgeübte Anpresskraft unterdrückbar oder verminderbar ist, sodass die mechanische Verbindung zwischen der Kupplungsscheibe und der Fliehkrafteinheit trennbar ist.

Einer Fliehkrafteinheit für eine Kupplung gemäß einem Ausführungsbeispiel und einer Kupplung für ein Kraftfahrzeug gemäß einem Ausführungsbeispiel liegt so die Erkenntnis zugrunde, dass ein gezieltes Trennen der Kupplung, beispielsweise für einen Gangwechsel, dadurch erzielbar ist, dass das erste Bauteil der Fliehkrafteinheit derart ausgebildet und angeordnet ist, dass dieses mit dem anpresskrafterzeugenden Element der Kupplung in Kontakt steht oder mit diesem in Kontakt gebracht werden kann, sodass durch die Vergrößerung des Abstands zwischen dem ersten Bauteil und dem zweiten Bauteil die mechanische Verbindung zu der Kupplungsscheibe der Kupplung durch das anpresskrafterzeugende Element derselben geschaffen oder verstärkt wird. Anders ausgedrückt kann bei einer Fliehkrafteinheit gemäß einem Ausführungsbeispiel die Anpresskraft durch das anpresskrafterzeugende Element über das erste Bauteil und das zweite Bauteil der Fliehkrafteinheit auf die Kupplungsscheibe der Kupplung übertragen werden, um so die mechanische Verbindung zur Übertragung des Drehmoments zu schaffen. Noch anders ausgedrückt kann also durch die Vergrößerung des Abstands des ersten und des zweiten Bauteils der Fliehkrafteinheit die Kupplung über das anpresskrafterzeugende Element derselben eingerückt werden.

Die mechanische Verbindung zur Übertragung eines Drehmoments kann hierbei durch Schaffen einer kraftschlüssigen oder reibschlüssigen Verbindung erfolgen. Eine kraftschlüssige oder reibschlüssige Verbindung kommt hierbei durch Haftreibung zustande, die somit eine Normalkraftkomponente zwischen den Verbindungspartner voraussetzt. Die Normalkraftkomponente wird hierbei durch das anpresskrafterzeugende Element der Kupplung in Form der Anpresskraft bewirkt, die vermittelt über das erste Bauteil und die weiteren Komponenten der Fliehkrafteinheit das zweite Bauteil der Fliehkrafteinheit gegen eine Reibfläche der Kupplungsscheibe presst, um so die mechanische Verbindung zur Übertragung des Drehmoments zu schaffen.

Zu diesem Zweck sind bei Fliehkrafteinheiten gemäß einem Ausführungsbeispiel das erste und/oder das zweite Bauteil häufig im Wesentlichen teller- oder scheibenförmig ausgestaltet. So weist das zweite Bauteil im Allgemeinen an einer der Kupplungsscheibe der Kupplung zugewandten Seite eine Anpressfläche auf, die beispielsweise wenigstens abschnittsweise ring- oder kreisringförmig ausgestaltet ist. Die Anpressfläche ist hierbei häufig im Wesentlichen senkrecht zu der axialen Richtung ausgerichtet.

Das erste und das zweite Bauteil können so im zusammengesetzten Zustand wenigstens teilweise ein nicht notwendigerweise abgeschlossenes Gehäuse der Fliehkrafteinheit bilden, wobei das zweite Bauteil der Kupplungsscheibe und das erste Bauteil dem anpresskrafterzeugenden Element zugewandt sind. Entsprechend weist das zweite Bauteil häufig die im Wesentlichen kreisringförmig oder ringförmig ausgebildete Anpressfläche auf, die ausgebildet ist, um mittelbar, beispielsweise über einen aufbringbaren Reibbelag oder eine separate Reibscheibe, oder unmittelbar mit der Kupplungsscheibe in Kontakt bringbar zu sein. Ebenso weist das erste Bauteil typischerweise eine entsprechende Kontaktfläche auf, über die es bei einer Vergrößerung des Abstands zwischen dem ersten und dem zweiten Bauteil mit dem anpresskrafterzeugenden Element der Kupplung in mechanischen Kontakt tritt, um die mechanische Verbindung zu der Kupplungsscheibe zu schaffen oder zu verstärken.

Das anpresskrafterzeugende Element der Kupplung ist hierbei häufig derart ausgestaltet, dass dieses eine Anpresskraft entlang der axialen Richtung zwischen dem zweiten Bauteil und der Kupplungsscheibe bewirkt, sodass durch die entstehende Haftreibung des Drehmoment zwischen diesen übertragen werden kann. Genauer gesagt ist das anpresskrafterzeugende Element hierbei häufig so ausgebildet, dass die Anpresskraft zwischen dem zweiten Bauteil und der Kupplungsscheibe erst dann bewirkt oder entsprechend gesteigert wird, wenn das zweite Bauteil aufgrund der Vergrößerung des Abstands zwischen dem ersten Bauteil und dem zweiten Bauteil mit dem anpresskrafterzeugenden Element mechanisch in Wechselwirkung tritt. So kann das anpresskrafterzeugende Element beispielsweise eine Teller- oder Membranfeder umfassen, wobei durch die Vergrößerung des Abstands zwischen dem ersten und dem zweiten Bauteil die Kraft durch eine Deformation der Membran oder Tellerfeder bewirkt wird. Ebenso kann es sich bei dem anpresskrafterzeugenden Element jedoch um eine eine oder mehrere Schraubenfedern umfassende Baueinheit handeln, bei der ebenfalls durch die Vergrößerung des Abstands zwischen dem ersten und dem zweiten Bauteil eine mechanische Deformation der einen oder der mehreren Schraubenfedern bewirkt wird. Ebenso können bei weiteren anpresskrafterzeugenden Elementen gegebenenfalls pneumatische, elastische oder andere mechanische Federelemente zum Einsatz kommen. Anders ausgedrückt, ist das anpresskrafterzeugende Element der Kupplung im Allgemeinen derart ausgebildet, dass durch die Vergrößerung des Abstands zwischen dem ersten und dem zweiten Bauteil die Anpresskraft von dem anpresskrafterzeugenden Element über die Fliehkrafteinheit auf die Kupplungsscheibe übertragen wird bzw. zwischen diesen herrscht. Anders ausgedrückt ist das anpresskrafterzeugende Element derart ausgestaltet, dass es bei der Vergrößerung des Abstands des ersten Bauteils und des zweiten Bauteils der Fliehkrafteinheit die Anpresskraft entlang der axialen Richtung auf die Fliehkrafteinheit und die Kupplungsscheibe ausübt und so das Drehmoment übertragbar macht.

Das anpresskrafterzeugende Element ist ferner hierbei häufig derart ausgebildet, dass die Anpresskraft durch eine weitere mechanische Wechselwirkung unterbrechbar oder zumindest reduzierbar ist. Die weitere mechanische Wechselwirkung kann hierbei beispielsweise von einer Ausrückeinheit bewirkt werden. Im Falle eines anpresskrafterzeugenden Elements, das eine Teller- oder Membranfeder umfasst, kann die Ausrückeinheit die weitere mechanische Wechselwirkung beispielsweise so auf die Membranoder Tellerfeder bewirken, dass diese aufgrund einer Hebelwirkung die Anpresskraft reduziert oder sogar vollständig unterbindet. Auch im Falle der weiteren beschriebenen anpresskrafterzeugenden Elemente, also beispielsweise auf Basis der zuvor beschriebenen, auf Schraubenfedern oder pneumatischen Federelementen beruhenden anpresskrafterzeugenden Elemente, kann durch eine entsprechende Hebelmimik die Anpresskraft durch die weitere mechanische Wechselwirkung reduziert oder vollständig unterbunden werden.

Die axiale Richtung entspricht hierbei im Allgemeinen der Richtung der Drehmomentübertragung und fällt so mit den Rotationsachsen bzw. Wellen der betreffenden Komponenten zusammen. So ist häufig das erste Bauteil, das zweit Bauteil sowie die Kupplungsscheibe und das anpresskrafterzeugende Element im Wesentlichen rotationssymmetrisch ausgestaltet, die eine koaxiale Übertragung des Drehmoments entlang der axialen Richtung, also entlang der gemeinsamen Achsen ermöglichen.

Das Rückstellfederelement kann hierbei derart ausgeführt sein, dass dieses eine Kraft zwischen dem ersten Bauteil und dem zweiten Bauteil mit einer solchen Stärke bewirkt, dass erst bei einem Überschreiten der Grenzdrehzahl sich der Abstand der zwischen dem ersten Bauteil und dem zweiten Bauteil entlang der axialen Richtung vergrößert.

Bei einer Fliehkrafteinheit gemäß einem Ausführungsbeispiel können das erste Bauteil und das zweite Bauteil ferner derart ausgebildet sein, dass sich der Abstand zwischen dem ersten Bauteil und dem zweiten Bauteil entlang der axialen Richtung bei einem Überschreiten einer weiteren Grenzdrehzahl bei einer weiter steigenden Drehzahl weniger stark vergrößert. Hierdurch kann es beispielsweise möglich sein, eine Vergrößerung der Abmessungen der Fliehkrafteinheit entlang der axialen Richtung zu beschränken und so beispielsweise die von dem anpresskrafterzeugenden Element erzeugte Anpresskraft und/oder eine mechanische Deformation desselben zu begrenzen. Ebenso kann es hierdurch möglich sein, eine Drehzahl, bei der eine Kupplung mit einer Fliehkrafteinheit gemäß einem Ausführungsbeispiel einkuppelt von einer Drehzahl, bei der die betreffende Kupplung mit der Fliehkrafteinheit wieder auskuppelt, unterschiedlich auszugestalten. Hierdurch kann es beispielsweise möglich werden, eine Hysterese hinsichtlich der übertragbaren Drehmomente bzw. hinsichtlich der Anpresskraft, die häufig linear zueinander verlaufen, zu bewirken, sodass eine Einkuppeldrehzahl, bei der die Kupplung schließt, höher sein kann als eine Auskuppeldrehzahl, bei der die Kupplung wieder trennt bzw. öffnet.

Bei einer Fliehkrafteinheit gemäß einem Ausführungsbeispiel können so das erste Bauteil eine Laufbahn und das zweite Bauteil eine Gegenlaufbahn für einen Fliehkraftkörper aufweisen, wobei die Laufbahn und die Gegenlaufbahn sich entlang einer radialen Richtung an dem ersten Bauteil und dem zweiten Bauteil erstrecken und wobei die Laufbahn und die Gegenlaufbahn jeweils einen Abschnitt aufweisen, die in Richtung der axialen Richtung schräg zueinander verlaufen. Der Abschnitt der Laufbahn und der Abschnitt der Gegenlaufbahn laufen hierbei mit zunehmendem Abstand von der axialen Richtung aufeinander zu. Der Fliehkörper ist hierbei derart ausgebildet, um sich bei einer Drehung der Fliehkrafteinheit um die axiale Richtung aufgrund einer auf ihn einwirkenden Fliehkraft entlang der Laufbahn und der Gegenlaufbahn zu bewegen. Die radiale Richtung erstreckt sich hierbei im Wesentlichen senkrecht zu der axialen Richtung. Hierbei wird die Vergrößerung des Abstands von dem ersten Bauteil zu dem zweiten Bauteil folglich über die beschriebene geometrische Ausgestaltung der Laufbahn und der Gegenlaufbahn und dem zwischen diesen beweglich angeordneten Fliehkraftkörper bewirkt. Die Übertragung der Anpresskraft von dem ersten Bauteil zu dem zweiten Bauteil und weiter zu der Kupplungsscheibe verläuft hierbei in axialer Richtung im Wesentlichen auch über den Fliehkraftkörper.

Bei anderen Ausführungsbeispielen können natürlich entsprechend eine Mehrzahl von Laufbahnen, Gegenlaufbahnen und Fliehkraftkörpern implementiert sein. So kann beispielsweise eine Fliehkrafteinheit sechs Laufbahnen, sechs Gegenlaufbahnen und sechs Fliehkraftkörper, jedoch auch jede andere Anzahl von Laufbahnen, Gegenlaufbahnen und Fliehkraftkörpern aufweisen.

Bei einer solchen Fliehkrafteinheit können die Laufbahn und die Gegenlaufbahn ferner jeweils einen weiteren Abschnitt aufweisen, die entlang der radialen Richtung mit wachsendem Abstand zu der axialen Richtung hinter den Abschnitten der Laufbahn und der Gegenlaufbahn angeordnet sind. Die weiteren Abschnitte der Laufbahn und der Gegenlaufbahn können hierbei schräg zueinander mit einem kleineren Winkel als die Abschnitte der Laufbahn und der Gegenlaufbahn zueinander verlaufen. Der weitere Abschnitt der Laufbahn und der weitere Abschnitt der Gegenlaufbahn laufen hierbei mit zunehmendem Abstand von der axialen Richtung aufeinander zu. Hierdurch kann die zuvor beschriebene Reduzierung der Vergrößerung des Abstands des ersten Bauteils und des zweiten Bauteils erzielt werden, wenn die Drehzahl der Fliehkrafteinheit die weitere Grenzdrehzahl übersteigt.

Bei einer solchen Fliehkrafteinheit kann das Verhältnis der Winkel zwischen den Abschnitten und den weiteren Abschnitten der Laufbahn und der Gegenlaufbahn wenigstens 3:1 und/oder der Winkel zwischen den weiteren Abschnitten der Laufbahn und der Gegenlaufbahn höchstens 10° und/oder der Winkel zwischen den Abschnitten der Laufbahn und der Gegenlaufbahn wenigstens 20° betragen. Durch die Implementierung einer oder mehrerer dieser konstruktiven Ausgestaltungen kann so beispielsweise die Einkuppeldrehzahl und/oder die Auskuppeldrehzahl derart eingestellt werden, dass eine Kupplung mit einer Fliehkrafteinheit gemäß einem Ausführungsbeispiel auch bei einer untertourigen Fahrweise nicht notwendigerweise rutscht.

Bei einer Fliehkrafteinheit gemäß einem Ausführungsbeispiel können die Laufbahn und/oder die Gegenlaufbahn einen äußeren radialen Anschlag aufweisen, der eine Bewegung des oder der Fliehkraftkörper entlang der radialen Richtung auf einen maximalen Abstandswert von der axialen Richtung begrenzt. Hierdurch wird im Zusammenspiel mit den Neigungen der Abschnitte bzw. der weiteren Abschnitte der Laufbahn und der Gegenlaufbahn ein maximaler Abstandswert definiert, der einerseits eine maximale Anpresskraft und/oder andererseits eine maximale Deformation des anpresskrafterzeugenden Elements oder seiner Komponenten beschränkt. Hierdurch kann so ein maximal übertragbares Drehmoment und/oder eine mechanische Belastung des anpresskrafterzeugenden Elements oder anderer Komponenten einer entsprechenden Kupplung beschränkt werden.

Bei einer Fliehkrafteinheit gemäß einem Ausführungsbeispiel können die Laufbahn und/oder die Gegenlaufbahn ferner einen inneren radialen Anschlag aufweisen, der eine Bewegung des oder der Fliehkraftkörper entlang der radialen Richtung auf einen minimalen Abstandswert zu der axialen Richtung derart begrenzt, dass der oder die Fliehkraftkörper bei dem Stillstand der Fliehkrafteinheit bereits mit den Abschnitten der Laufbahn und der Gegenlaufbahn in Kontakt stehen. Hierdurch kann gegebenenfalls ein Anfahrverhalten einer Kupplung mit einer Fliehkrafteinheit gemäß einem Ausführungsbeispiel dadurch verbessert werden, dass der oder die Fliehkraftkörper bereits mit dem geneigten Abschnitt in Kontakt stehen, sodass unmittelbar durch eine Veränderung der Drehzahl der Fliehkrafteinheit eine Veränderung des Abstands des ersten und des zweiten Bauteils der Fliehkrafteinheit einhergehen, ohne dass der oder die Fliehkraftkörper zunächst zu dem entsprechenden Abschnitt gelangen müssen. Hierdurch kann gegebenenfalls auch eine Geräuschentwicklung positiv beeinflusst werden, da auch bei sehr niedrigen Drehzahlen der Fliehkrafteinheit der oder die Fliehkraftkörper sich in einer definierten Position zwischen dem inneren radialen Anschlag und dem Abschnitt der Laufbahn bzw. der Gegenlaufbahn befinden.

Bei einer Fliehkrafteinheit gemäß einem Ausführungsbeispiel kann der Fliehkraftkörper einen ersten und einen zweiten im Wesentlichen rotationssymmetrischen Teilkörper umfassen, wobei der erste Teilkörper mit der Laufbahn und der zweite Teilkörper mit der Gegenlaufbahn in Kontakt stehen. Der erste und der zweite Teilkörper sind hierbei zueinander über ein Gleitlager oder ein Wälzlager, beispielsweise ein Nadellager gelagert. Hierdurch kann es gegebenenfalls möglich sein, eine reibungsärmere Übermittlung der Anpresskraft über die Fliehkrafteinheit zu bewirken, da sich die beiden Teilkörper des oder der Fliehkraftkörper aufgrund ihrer rotationssymmetrischen Ausgestaltung und ihrer Lagerung reibungsärmer zwischen der Laufbahn und der Gegenlaufbahn der Fliehkrafteinheit bewegen können. Hierdurch kann gegebenenfalls ein Ansprechverhalten der Fliehkrafteinheit und damit einer Kupplung mit einer solchen Fliehkrafteinheit gemäß einem Ausführungsbeispiel ebenso wie eine Energieeffizienz und damit ein Wirkungsgrad der Kupplung verbessert werden.

Bei einer Fliehkrafteinheit gemäß einem Ausführungsbeispiel kann bei einem Betriebszustand der Fliehkraftkörper wenigstens teilweise in radialer Richtung außerhalb der Kupplungsscheibe angeordnet sein. Anders ausgedrückt, kann der oder können die Fliehkraftkörper bezogen auf die Kupplungsscheibe in radialer Richtung nach außen versetzt angeordnet sein. Hierdurch kann gegebenenfalls eine Kupplung mit einer Fliehkrafteinheit implementiert werden, die keinen oder nur einen geringfügigen Zuwachs hinsichtlich ihrer axialen Ausdehnung im Vergleich zu einer konventionellen Kupplung erfährt. Eine solche Kupplung kann beispielsweise bei Anwendungen zum Einsatz kommen, bei denen gerade der axiale Bauraum ein entscheidendes Kriterium darstellt. So kann eine solche Kupplung mit einer entsprechenden Fliehkrafteinheit gemäß einem Ausführungsbeispiel beispielsweise bei Kleinwagen oder anderen Kraftfahrzeugen zum Einsatz kommen, bei denen der Motor und/oder das Getriebe quer zur Fahrtrichtung eingebaut sind.

Bei einer Fliehkrafteinheit gemäß einem Ausführungsbeispiel kann der Fliehkraftkörper oder können die Fliehkraftkörper unter allen Betriebszuständen nicht oder um nicht mehr als einen größten Radius des Fliehkraftkörpers oder der Fliehkraftkörper über die Kupplungsscheibe in radialer Richtung hervorstehen. Anders ausgedrückt können bei einer solchen Fliehkrafteinheit der oder die Fliehkraftkörper in axialer Richtung zu der Kupplungsscheibe angeordnet sein, was beispielsweise bei Anwendungsszenarien von Vorteil sein kann, bei denen gerade der radiale Bauraum ein entscheidendes Kriterium darstellt. Gerade im Bereich des Rennsports kann es beispielsweise von Vorteil sein, eine entsprechende Anordnung des oder der Fliehkraftkörper im Inneren der Fliehkrafteinheit zu wählen. Darüber hinaus kann es gegebenenfalls auch möglich sein, die Fliehkrafteinheit in einem solchen Fall konstruktiv zu vereinfachen, da die auftretenden Kräfte nicht mehr entlang der radialen Richtung zu einem Punkt außerhalb des Durchmessers der Kupplungsscheibe übertragen werden müssen, sodass gegebenenfalls auftretende Biegemomente der Bauteile und Komponenten der Fliehkrafteinheit reduzierbar sein können.

Eine Fliehkrafteinheit gemäß einem Ausführungsbeispiel kann hierbei derart ausgebildet sein, dass sie in einem Gehäusekorb mit einem anpresskrafterzeugenden Element einsetzbar ist, das so ausgebildet ist, dass es bei der Vergrößerung des Abstands des ersten Bauteils von dem zweiten Bauteil der Fliehkrafteinheit eine Anpresskraft entlang der axialen Richtung auf die Fliehkrafteinheit und die Kupplungsscheibe ausübt, sodass das Drehmoment übertragbar wird. So kann eine Fliehkrafteinheit gemäß einem Ausführungsbeispiel beispielsweise als Druckplatte einer Kraftfahrzeugkupplung, beispielsweise einer Einscheiben-Trockenkupplung sein. Ebenso kann sie jedoch auch im Zusammenhang mit einem Reibpaket mit mehr als einer Kupplungsscheibe und/oder einer Mehrzahl von Innen- und Außenlamellen zum Einsatz kommen, wie sie beispielsweise im Bereich des Rennsports aber auch bei anderen Kupplungen zum Einsatz kommt, bei denen eine betragsmäßig große Drehmomentübertragung gefordert ist.

Bei einer Kupplung gemäß einem Ausführungsbeispiel kann die Fliehkrafteinheit zumindest in einem verschleißfreien Zustand stets mit dem anpresskrafterzeugenden Element in Kontakt stehen. Hierdurch kann gegebenenfalls ein Ansprechverhalten der Fliehkrafteinheit gegenüber einer Lösung verbessert werden, bei der zunächst ein Abstand zu dem anpresskrafterzeugenden Element überwunden werden muss, bevor die Anpresskraft an die Kupplungsscheibe übertragen werden kann.

Bei einer Kupplung gemäß einem Ausführungsbeispiel kann das anpresskrafterzeugende Element eine Teller- oder Membranfeder umfassen, die in einem vorgespannten Zustand in dem Gehäusekorb angeordnet ist. Hierdurch kann bereits bei einer geringeren Vergrößerung des Abstands des ersten Bauteils von dem zweiten Bauteil der Fliehkrafteinheit aufgrund der Vorspannung einer größere Anpresskraft an die Kupplungsscheibe übertragen und damit eine Drehmomentübertragung erhöht werden.

Bei einer Kupplung gemäß einem Ausführungsbeispiel kann die Ausrückeinheit ein Vorspannfederelement aufweisen, das derart ausgebildet und angeordnet ist, dass die Ausrückeinheit stets mit dem anpresskrafterzeugenden Element derart in Kontakt steht, dass die Ausrückeinheit die mechanische Verbindung im Wesentlichen zeitlich unmittelbar zwischen der Kupplungsscheibe und der Fliehkrafteinheit trennbar macht. Hierdurch kommt es also bei einer Betätigung der Ausrückeinheit im Wesentlichen zeitlich unmittelbar zu der weiteren mechanischen Wechselwirkung mit dem anpresskrafterzeugenden Element, was zu einer Reduzierung der Anpresskraft und damit zu einer Reduzierung oder sogar zu einem Trennen der Drehmomentübertragung führen kann. Ein gegebenenfalls vom Betriebszustand der Kupplung bzw. der Fliehkrafteinheit abhängiges Spiel muss so gegebenenfalls nicht erst überwunden werden. Hierdurch kann ein Gangwechsel gegebenenfalls verschleißärmer und reproduzierbarer durchgeführt werden, da eine Trennung der Drehmomentübertragung, also ein Auskuppeln unter definierteren Bedingungen erfolgen kann.

Ausführungsbeispiele werden unter Bezugnahme auf die beiliegenden Figuren näher beschrieben und erläutert.
- Fig. 1: zeigt eine Querschnittsdarstellung einer Kupplung gemäß einem Ausführungsbeispiel mit einer Fliehkrafteinheit gemäß einem Ausführungsbeispiel als Explosionsdarstellung;

- Fig. 2: zeigt eine Querschnittsdarstellung einer Kupplung mit einer Fliehkrafteinheit gemäß einem Ausführungsbeispiel;
- Fig. 3: zeigt eine Detailvergrößerung der Fliehkrafteinheit gemäß einem Ausführungsbeispiel im Bereich der Fliehkraftkörper ; und
- Fig. 4: zeigt eine perspektivische Darstellung eines Fliehkraftkörpers der Fliehkrafteinheit.

Im Rahmen der vorliegenden Beschreibung werden zusammenfassende Bezugszeichen für Objekte, Strukturen und andere Komponenten verwendet werden, wenn die betreffende Komponente an sich oder mehrerer entsprechende Komponenten innerhalb eines Ausführungsbeispiels oder innerhalb mehrerer Ausführungsbeispiele beschrieben werden. Passagen der Beschreibung, die sich auf eine Komponente beziehen, sind daher auch auf andere Komponenten in anderen Ausführungsbeispielen übertragbar, soweit dies nicht explizit ausgeschlossen ist oder sich dies aus dem Zusammenhang ergibt. Werden einzelne Komponenten bezeichnet, werden individuelle Bezugszeichen verwendet, die auf den entsprechenden zusammenfassenden Bezugszeichen basieren. Bei der nachfolgenden Beschreibung von Ausführungsformen bezeichnen daher gleiche Bezugszeichen gleiche oder vergleichbare Komponenten.

Komponenten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt oder implementiert werden. Es ist so beispielsweise möglich, dass mehrere Komponenten innerhalb eines Ausführungsbeispiels bezüglich eines Parameters identisch, bezüglich eines anderen Parameters jedoch unterschiedlich ausgeführt sein können.

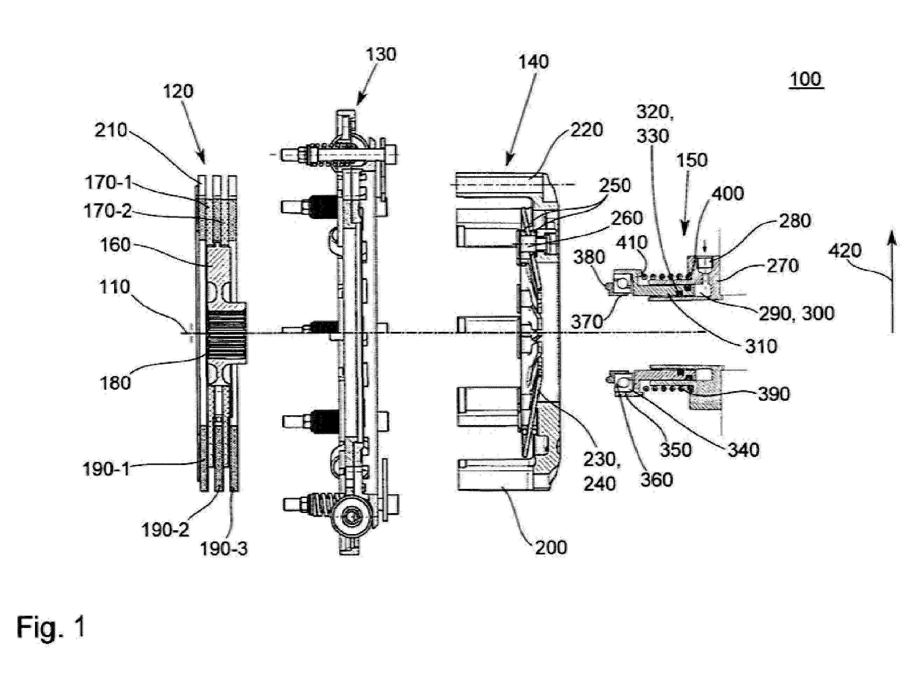

Fig. 1 zeigt eine Querschnittsdarstellung einer Kupplung 100 gemäß einem Ausführungsbeispiel als Explosionsdarstellung, bei der die einzelnen Hauptbaugruppen der Kupplung 100 entlang einer gemeinsamen axialen Richtung 110 versetzt eingezeichnet sind. Die Kupplung 100 umfasst ein Reibpaket 120, eine Fliehkrafteinheit 130, einen Gehäusekorb 140 und eine Ausrückeinheit 150.

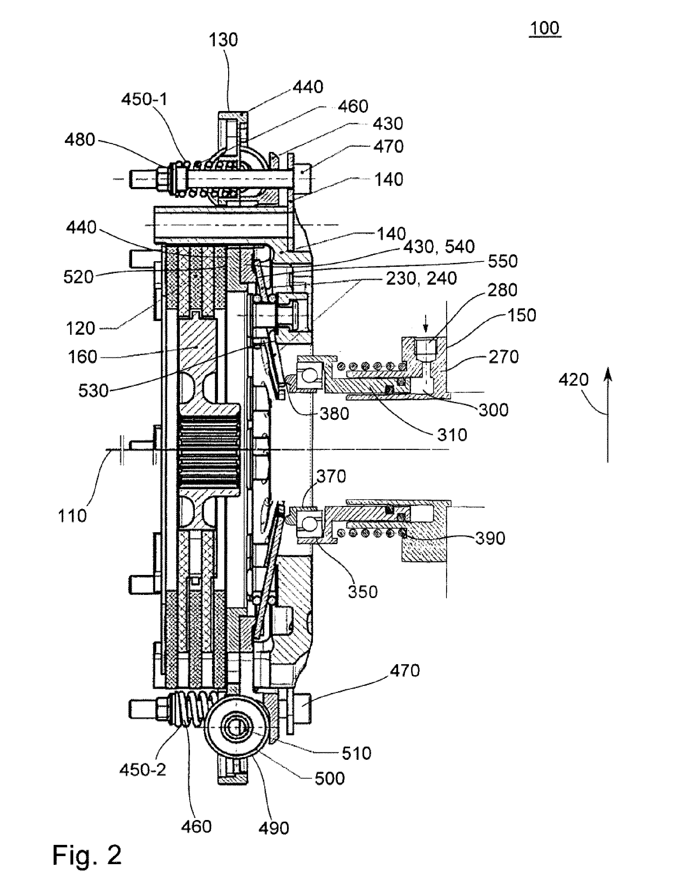

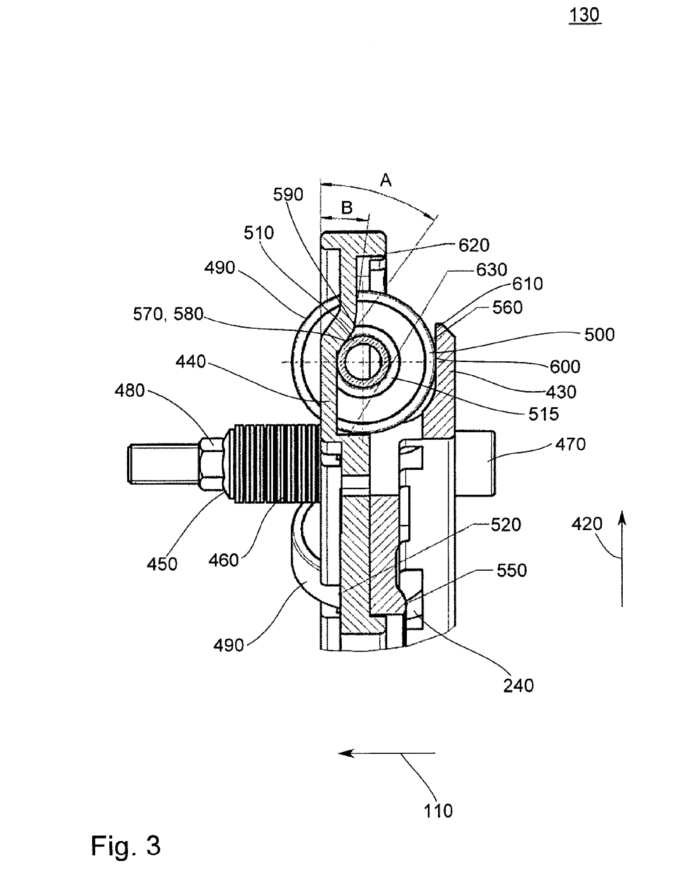

Während die Fliehkrafteinheit 130 insbesondere im Zusammenhang mit den Fig. 2 und 3 hinsichtlich ihres Aufbaus und ihrer Funktionsweise noch näher beschrieben werden wird, bietet es sich an dieser Stelle an, sowohl das Reibpaket 120 als auch den Gehäusekorb 140 sowie die Ausrückeinheit 150 hinsichtlich ihrer Struktur näher zu beschreiben.

Das Reibpaket 120 umfasst eine Kupplungsscheibe 160, die eine Mehrzahl von Innenlamellen 170-1, 170-2 aufweist. Die Innenlamellen 170 sind hierbei verdrehfest mit der Kupplungsscheibe verbunden, können jedoch gegebenenfalls entlang der axialen Richtung 110 verschiebbar sein. Die Kupplungsscheibe 160 weist ferner eine Nabe 180 auf, mit deren Hilfe die Kupplungsscheibe 160 mit einer Getriebeeingangswelle oder einer anderen Welle drehfest verbindbar ist. Die Kupplungsscheibe 160 ist entsprechend im Wesentlichen rotationssymmetrisch zu der axialen Richtung 110 ausgerichtet.

Das Reibpaket 120 umfasst ferner eine Mehrzahl von Außenlamellen 190-1, 190-2 und 190-3 die derart angeordnet und ausgebildet sind, dass sie jeweils abwechselnd mit den Innenlamellen 170 in Kontakt bringbar sind. Die Außenlamellen 190 sind hierbei über den Gehäusekorb 140 zueinander verdrehfest, jedoch in axialer Richtung 110 einander verschiebbar angeordnet. Die Innenlamellen 170 und die Außenlamellen 190 können hierbei optional teilweise oder vollständig einen Reibbelag aufweisen, sodass ein Haftreibungskoeffizient zwischen den Außenlamellen 190 und den Innenlamellen bei Anliegen einer entlang der axialen Richtung 110 wirkenden Anpresskraft gegenüber entsprechenden Innen- und Außenlamellen 170, 190 ohne einen entsprechenden Reibbelag gegebenenfalls erhöht werden kann.

Der Gehäusekorb 140 ist hierbei derart ausgebildet, dass dieser nicht nur die Außenlamellen 190, sondern auch die Fliehkrafteinheit 130 verdrehfest, jedoch axial verschiebbar, also entlang der axialen Richtung 110 verschiebbar aufnimmt. Zu diesem Zweck weist der Gehäusekorb 140 eine Mehrzahl stabförmiger Elemente 200 auf, mit deren Hilfe die Außenlamellen 190 über entsprechende Ausnehmungen 210, beispielsweise Laschen, verdrehfest mit dem Gehäusekorb 140 koppelbar sind.

Je nach konkreter Ausgestaltung des Gehäusekorbs 140 können die stabförmigen Elemente 200, gegebenenfalls jedoch auch andere Elemente des Gehäusekorbs 140 Bohrungen 220 oder anderen Befestigungsstrukturen umfassen, mit deren Hilfe der Gehäusekorb 140 mit einem Schwungrad eines Motors oder einer anderen angetriebenen Komponente mechanisch drehfest verbindbar ist. Bei dem in Fig. 1 gezeigten Ausführungsbeispiel einer Kupplung 100 kann so der Gehäusekorb 140 mit einem in Fig. 1 nicht gezeigtem Schwungrad beispielsweise über eine Verschraubung mechanisch verbunden werden.

Der Gehäusekorb 140 weist ein anpresskrafterzeugendes Element 230 in Form einer in dem Gehäusekorb 140 eingenieteten und vorgespannten Membranfeder 240 auf. Die Membranfeder 240 ist hierbei über zwei als Drahtringe ausgeführte Kippringe 250 vorgespannt in dem Gehäusekorb 140 angeordnet. Genauer gesagt, ist die Membranfeder 240 hierbei über einen Befestigungsring 260 mit dem Gehäusekorb 140 vernietet.

Die Ausrückeinheit 150 weist ein Gehäuse 270 mit einem Hydraulikanschluss 280 und einer Ausnehmung 290 auf, die den Arbeitsraum 300 der Ausrückeinheit 150 bildet. Das Gehäuse 270 wird auch als Nehmerzylinder bezeichnet.

In der Ausnehmung 290 ist ein Kolben 310 angeordnet, der in zwei ringförmig ausgestalteten Nute 320 jeweils ein Dichtelement 330 in Form eines O-Rings aufweist. Die beiden O-Ringe bzw. Dichtelemente 330 dichten hierbei den Arbeitsraum 300 gegen ein Austreten von Hydraulikflüssigkeit aus dem Arbeitsraum 300 ab. Der Kolben 310 ist mit einem Außenring 340 eines Wälzlagers 350 verbunden, bei dem es sich bei dem in Fig. 1 gezeigten Ausführungsbeispiel um ein Vier-Punkt-Lager handelt. Bei anderen Ausführungsbeispielen können jedoch gegebenenfalls andere Wälzlager, gegebenenfalls auch Gleitlager zum Einsatz kommen. Ein Innenring 360 des Wälzlagers 350 ist mit einem Ausrückring 370 gekoppelt, der eine in der axialen Richtung 110 weisende Ausrückschneide 380 aufweist.

Zwischen dem Gehäuse 270 und dem Kolben 310 ist ferner ein Vorspannfederelement 390, das auch als Vorlastfeder oder Vorspannfeder bezeichnet wird, angeordnet und auf Druck entlang der axialen Richtung 110 vorgespannt. Das Vorspannfederelement 390 ist hierbei in einer Nut 400 in dem Gehäuse 270 und in einer entsprechenden Gegennut 410 des Gehäuses 270 angeordnet, sodass das Vorspannfederelement 390 gegen ein Verrutschen senkrecht zu der axialen Richtung 110, also entlang einer radialen Richtung 420 gesichert ist.

Die Ausrückeinheit 150 bzw. ihr Vorspannfederelement 390 sind hierbei derart ausgebildet und angeordnet, dass die Ausrückeinheit 150 stets mit dem anpresskrafterzeugenden Element 230, also der Membranfeder 240 in Kontakt steht. Hierdurch kann die Ausrückeinheit 150 die mechanische Verbindung unmittelbar zwischen der Kupplungsscheibe 160 und der Fliehkrafteinheit 130 trennen, wie dies im Zusammenhang mit Fig. 2 näher beschrieben werden wird. Bevor jedoch im Zusammenhang mit Fig. 2 nicht zuletzt auch die innere Struktur der Fliehkrafteinheit 130 näher beschrieben werden soll, sollte an dieser Stelle noch erwähnt werden, dass sowohl die Fliehkrafteinheit 130, als auch der Gehäusekorb 140 sowie die Ausrückeinheit 150 jeweils eine zentrale Bohrung aufweisen, durch die die Getriebeeingangswelle oder eine andere Welle geführt werden kann, mit der Nabe 180 der Kupplungsscheibe 160 verbindbar ist. Hierdurch kann eine kollineare bzw. koaxiale Anordnung der Getriebeeingangswelle und der Kurbelwelle oder einer anderen, mit dem Gehäusekorb 140 über die Bohrungen 220 mechanisch verbundene Welle geführt werden.

Fig. 2 zeigt eine Querschnittsdarstellung der Kupplung 100 aus Fig. 1 gemäß einem Ausführungsbeispiel in einem zusammengesetzten Zustand. Die Fliehkrafteinheit 130 weist ein erstes Bauteil 430, das auch als Oberteil bezeichnet wird, und ein zweites Bauteil 440 auf, welches auch als Unterteil bezeichnet wird. Das zweite Bauteil 440 ist bezogen auf die axiale Richtung 110 drehfest mit dem ersten Bauteil 430 gekoppelt. Das erste Bauteil 430 und das zweite Bauteil 440 sind hierbei im Wesentlichen teller- bzw. scheibenförmig ausgestaltet. Die Fliehkrafteinheit 130 und damit die Kupplung 100 umfassen ferner mehrere Rückstellfederelemente 450, die ausgebildet sind, um eine Kraft zwischen dem ersten Bauteil 430 und dem zweiten Bauteil 440 derart zu bewirken, dass ein Abstand zwischen dem ersten Bauteil 430 und dem zweiten Bauteil 440 entlang der axialen Richtung 110 bei einem Stillstand der Fliehkrafteinheit 130, also einer Drehzahl von etwa 0 1/min, einen Ruhewert annimmt. Das Rückstellfederelement 450 kann hierbei derart ausgeführt sein, dass dieses eine Kraft zwischen dem ersten Bauteil 430 und dem zweiten Bauteil 440 mit einer solchen Stärke bewirkt, dass erst bei einem Überschreiten der Grenzdrehzahl sich der Abstand der zwischen dem ersten Bauteil 430 und dem zweiten Bauteil 440 entlang der axialen Richtung 110 vergrößert.

Die in Fig. 2 gezeigte Darstellung zeigt zwei Rückstellfederelemente 450-1 und 450-2. Die in Fig. 1 dargestellte Kupplung bzw. ihre Fliehkrafteinheit 130 umfasst hierbei genauer gesagt insgesamt sechs Rückstellfederelemente 450, wobei bei anderen Ausführungsbeispielen einer Kupplung 100 die Anzahl der entsprechenden Rückstellfederelemente 450 kleinere, aber auch größere Werte annehmen kann. So kann beispielsweise eine Fliehkrafteinheit 130 auch nur ein einzelnes Rückstellfederelement 450, jedoch auch eine höhere oder niedrigere Anzahl als die zuvor genannten beiden Werte aufweisen.

Die Rückstellfederelemente 450 der Fliehkrafteinheit 130 aus Fig. 2 basieren auf der Verwendung von Schraubenfedern 460, die als Druckfedern ausgestaltet sind. Aufgrund ihrer mechanischen Verbindung mit dem ersten und dem zweiten Bauteil 430, 440 ermöglichen sie es so, das erste Bauteil 430 und das zweite Bauteil 440 aufeinander zu zudrücken. Um dies zu ermöglichen, weisen die Rückstellfederelemente 450, wie sie in Fig. 2 dargestellt sind, eine Schraube 470 auf, an der sich über ein Auflagebauteil 480 die Schraubenfeder 460 abstützt. Das Auflagebauteil 480 kann hier beispielsweise durch eine auf die Schraube 470 aufbringbare Hülse und eine Mutter, jedoch auch durch ein entsprechend ausgebildetes Bauteil gebildet werden, das eine entsprechend ausgeformte Auflagefläche für die Schraubenfeder 460 aufweist. Die Schraubenfeder 460 stützt sich an dem zweiten Bauteil 440 an einer entsprechenden, eine Bohrung umgebende Auflagefläche ab.

Die zuvor beschriebene, von dem Rückstellfederelement 450 ausgeübte Kraft zwischen dem ersten und dem zweiten Bauteil 430, 440 wird bei dem in Fig. 2 gezeigten Ausführungsbeispiel einer Fliehkrafteinheit 130 genauer gesagt dadurch hervorgerufen, dass das erste Bauteil 430 in dem zusammengebauten Zustand eine zu der zuvor erwähnten Bohrung um die Auflagefläche des zweiten Bauteils 440 herum angeordnete Bohrung aufweist, durch die sich die Schraube 470 erstreckt. Die Schraube 470 erstreckt sich darüber hinaus durch eine Bohrung in dem Gehäusekorb 140 und stützt sich an einer Auflagefläche des Gehäusekorbs 140 ab. Die die Reduzierung des Abstands des ersten und des zweiten Bauteils 430, 440 bewirkende Kraft entlang der axialen Richtung 110 kommt also hier dadurch zustande, dass die Schraubenfeder 460 auf Druck vorgespannt wird und aufgrund ihrer mechanischen Verbindung über das Auflagebauteil 480 und ihre Befestigung an dem Gehäusekorb 140 das zweite Bauteil 440 (Unterteil) in Richtung des ersten Bauteils 430 (Oberteil) drückt. Hierbei wird die Kraft von dem zweiten Bauteil 440 auf das erste Bauteil 430 über zwischen diesen angeordneten Fliehkraftkörpern vermittelt. Die in Fig. 2 gezeigten Schrauben 470, welche durch die Schraubenfedern 460 vorgespannt sind, sind hierbei also über Laschen mit dem Gehäusekorb 140 verbunden, sodass die gesamte Fliehkrafteinheit 130 gegen die Membranfeder 240 bzw. im Falle einer Implementierung eines anderen anpresskrafterzeugenden Elements 230 gegen dieses gedrückt wird. Bei anderen Ausführungsbeispielen kann hier gegebenenfalls auch nur ein Teil der betreffenden Schrauben 470 entsprechend über Bohrungen oder Laschen mit dem Gehäusekorb 140 verbunden sein.

Wie im Zusammenhang mit Fig. 3 noch näher beschrieben werden wird, laufen die Fliehkraftkörper 490 hierbei auf einer Laufbahn an dem ersten Bauteil 430 und einer Gegenlaufbahn des zweiten Bauteils 440 entlang. Die Laufbahnen erstrecken sich hierbei im Wesentlichen entlang der radialen Richtung 420 und weisen jeweils wenigstens einen Abschnitt auf, die in Richtung der axialen Richtung 110 derart schräg zueinander verlaufen, dass die entsprechenden Abschnitte der Laufbahn und der Gegenlaufbahn mit zunehmendem Abstand von der axialen Richtung 110, also mit zunehmendem Radius von der zentralen Bohrung in der Mitte der Fliehkrafteinheit 130 aufeinander zulaufen. Die Fliehkraftkörper 490 sind hierbei derart ausgebildet, dass sie sich bei einer Drehung der Fliehkrafteinheit 130 um die axiale Richtung 110 aufgrund einer auf sie einwirkenden Fliehkraft entlang der Laufbahn und der Gegenlaufbahn nach außen, also zu größer werdenden Radien bewegen können.

Die Anzahl der Fliehkraftkörper 490 kann hierbei grundsätzlich beliebig gewählt werden. So kann bei einer Fliehkrafteinheit 130 gegebenenfalls bereits der Einsatz eines einzigen entsprechenden Fliehkraftkörpers 490 genügen. Bei anderen Ausführungsbeispielen kann es jedoch ratsam sein, schon um eine radialsymmetrische Gewichtsverteilung zu erzielen, mehr als einen, beispielsweise zwei oder mehrere Fliehkraftkörper 490 einzusetzen. Bei dem in Fig. 1 und 2 gezeigten Ausführungsbeispiel einer Fliehkrafteinheit 130 sind so beispielsweise sechs Fliehkraftkörper 490 implementiert. Gerade bei der Verwendung von Rückstellfederelementen 450 auf Basis von Schraubenfedern 460, wie dies zuvor beschrieben wurde, kann es beispielsweise ratsam sein, die Anzahl der Fliehkraftkörper 490 in einen festen Zusammenhang zu der Zahl der Rückstellfederelemente 450 zu setzen. So kann beispielsweise jedem Rückstellfederelement 450 genau ein Fliehkraftkörper 490 zugeordnet sein, sodass die Anzahl der Rückstellfederelemente 450 und der Fliehkraftkörper 490 übereinstimmt. Bei anderen Ausführungsbeispielen können jedoch einem Rückstellfederelement 450 auch mehrere Fliehkraftkörper, beispielsweise zwei Fliehkraftkörper 490, oder aber jedem Fliehkraftkörper 490 mehrere, beispielsweise zwei Rückstellfederelemente 450 zugeordnet sein, sodass die Anzahl der implementierten Rückstellfederelemente 450 zu der Anzahl der implementierten Fliehkraftkörper 490 eine natürliche Zahl oder ein Kehrwert einer natürlichen Zahl, also beispielsweise 2, 1 oder 1/ 2 beträgt.

Durch den Einsatz der zuvor kurz beschriebenen Laufbahnen und Gegenlaufbahnen, zwischen denen die Fliehkraftkörper 490 laufen, sind das zweite Bauteil 440 und das erste Bauteil 430 folglich derart ausgebildet, dass sich ein Abstand zwischen diesen beiden Bauteilen 430, 440 entlang der axialen Richtung 110 bei einem Überschreiten einer Grenzdrehzahl ausgehend von einem Ruhewert bei einem Stillstand der Fliehkraft 130 vergrößert. Die Grenzdrehzahl hängt hierbei beispielsweise von einer durch die Schraubenfedern 460 der Rückstellfederelemente 450 bewirkten Kraft ab. Bei anderen Ausführungsbeispielen kann diese Funktionalität jedoch auch ohne den Einsatz von Fliehkraftkörpern 490 umgesetzt werden, indem beispielsweise Kniehebelkonstruktionen zum Einsatz kommen.

Die Fliehkraftkörper 490 weisen einen ersten Teilkörper 500 und einen zweiten Teilkörper 510 auf, die beide im Wesentlichen rotationssymmetrisch ausgestaltet sind. Bei dem in Fig. 2 gezeigten Ausführungsbeispiel einer Fliehkrafteinheit 130 sind die beiden Teilkörper so im Wesentlichen tonnen- oder rollenförmig ausgestaltet. Der erste Teilkörper 500 steht hierbei mit der Laufbahn des ersten Bauteils 430, also dem Oberteil in Kontakt, während der zweite Teilkörper 510 mit der Gegenlaufbahn des zweiten Bauteils 440, also dem Unterteil in Kontakt steht. Die beiden Teilkörper 500, 510 können beispielsweise über ein Wälzlager 515 zueinander drehbar gelagert sein. Um eine kompakte Konstruktion zu realisieren, können so die beiden Teilkörper 500, 510 beispielsweise über ein Nadellager zueinander gelagert sein. Alternativ oder ergänzend können die beiden Teilkörper auch über ein Gleitlager zueinander drehbar gelagert sein.

Da die Fliehkraftkörper aufgrund ihrer Interaktion mit der Laufbahn und der Gegenlaufbahn der beiden Bauteile 430, 440 bei dem in den Fig. 1 und 2 gezeigten Ausführungsbeispiel einer Fliehkrafteinheit 130 für die Veränderung des Abstands der beiden Bauteile 430, 440 sorgen, werden diese auch als Fliehkraftgewichte oder kurz Gewichte bezeichnet. Die genaue Ausgestaltung und Implementierung der Laufbahnen und der Gegenlaufbahnen sowie die sich daraus ergebenden funktionalen Merkmale werden im Zusammenhang mit Fig. 3 näher beschrieben.

Das zweite Bauteil 440 ist ausgebildet, um über das Reibpaket 120, also über die Kupplungsscheibe 160 eine mechanische Verbindung zur Übertragung eines Drehmoments zu schaffen. Zu diesem Zweck weist das zweite Bauteil 440, also das Unterteil eine Anpressfläche 520 auf, die bei dem in Fig. 1 und 2 gezeigten Ausführungsbeispiel einer Fliehkrafteinheit 130 bzw. einer entsprechenden Kupplung 100 so ausgebildet und angeordnet ist, dass diese eine Anpresskraft auf eine Außenlamelle 190, genauer gesagt die Außenlamelle 190-3 des Reibpakets 120 ausüben kann. Die Anpressfläche 520 ist so wenigstens abschnittsweise ringförmig ausgestaltet und kann optional mit einem zusätzlichen Reibbelag versehen sein. Die Anpressfläche 520 verläuft hierbei im Wesentlichen senkrecht zu der axialen Richtung 110. Genauer gesagt ist die Anpressfläche 520 des Unterteils, also des zweiten Bauteils 440 bei dem in Fig. 1 und 2 gezeigten Ausführungsbeispiel wenigstens abschnittsweise kreisringförmig ausgestaltet. Die Abweichungen von der Kreisringform können hierbei konstruktivbedingt, beispielsweise zur Unterbringung von Bohrlöchern oder anderen Komponenten, jedoch auch funktionsbedingt beispielsweise zur Reduzierung des Gewichts, zur Schaffung von Kühlkanälen oder aus anderen Gründen erfolgen. Das zweite Bauteil 440 kann so beispielsweise eine plane Unterseite aufweisen, die dem Reibpaket 120 bzw. der Kupplungsscheibe 160 zugewandt ist und beispielsweise im Wesentlichen senkrecht zu der axialen Richtung 110 verlaufen kann, um auf das Reibpaket 120 zu drücken.

Das erste Bauteil 430, also das Oberteil, ist hierbei ausgebildet, um mit dem anpresskrafterzeugenden Element 230, also der Membranfeder 240 der Kupplung 100 in Kontakt zu stehen oder in Kontakt gebracht zu werden, sodass durch die Vergrößerung des Abstands zwischen dem ersten Bauteil 430 und dem zweiten Bauteil 440 durch das anpresskrafterzeugende Element 230 die mechanische Verbindung zu der Kupplungsscheibe 160 geschaffen oder verstärkt werden kann. Die mechanische Verbindung, die die Übertragung des Drehmoments ermöglicht, ist hierbei eine kraftschlüssige oder reibschlüssige Verbindung, wie dies bereits zuvor erläutert wurde. Sie basiert also auf dem Phänomen der Haftreibung und erfordert so eine entsprechende Anpresskraft, die von dem anpresskrafterzeugenden Element 230 in Richtung der axialen Richtung 110 bei entsprechender Beanspruchung oder Anforderung bereitgestellt wird.

So ist, wie bereits im Zusammenhang mit Fig. 1 beschrieben wurde, in den Gehäusekorb 140 die Membranfeder 240 als anpresskrafterzeugendes Element 230 eingenietet, wobei die Membranfeder 240 durch einen Anschlag 530 an dem Gehäusekorb 140 vorgespannt gehalten wird.

Zu diesem Zweck weist das erste Bauteil 430 einen Abschnitt 540 auf, der in dem in Fig. 2 gezeigten Zustand, bei dem der Abstand entlang der axialen Richtung 110 der beiden Bauteile 430, 440 den Ruhewert annimmt, mit dem zweiten Bauteil 440 in Kontakt steht. Dieser Abschnitt des ersten Bauteils 430 weist eine ringförmige Schneide 550 auf, die gegen die vorgespannte Membranfeder 240 gedrückt wird. Hierdurch wird bei einer Veränderung des Abstands des ersten Bauteils 430 zu dem zweiten Bauteil 440 entlang der axialen Richtung 110 die Membranfeder 240 deformiert, sodass diese eine Anpresskraft entlang der axialen Richtung 110 auf das erste Bauteil 430 ausübt, die dieses über die Fliehkraftkörper 490 an das zweite Bauteil 440 und über die Anpressfläche 520 an das Reibpaket 120 weiterleitet.

Selbstverständlich kann bei anderen Ausführungsbeispielen einer Fliehkrafteinheit 130 oder einer Kupplung 100 die Schneide 550 auch an einem anderen Abschnitt als dem mit dem zweiten Bauteil 440 in Kontakt stehenden Abschnitt angeordnet sein. Darüber hinaus kann im Falle einer andersartigen Implementierung des anpresskrafterzeugenden Elements 230 auch ein gänzlich anderer Mechanismus zum Hervorrufen der Anpresskraft bzw. zum Bewirken derselben verwendet werden.

Die Verwendung einer Fliehkrafteinheit 130 gemäß einem Ausführungsbeispiel im Rahmen einer Kupplung 100 gemäß einem Ausführungsbeispiel ermöglicht unter anderem auch die Verwendung der Ausrückeinheit 150, um die Drehmomentübertragung zu unterbrechen. Wie bereits im Zusammenhang mit Fig. 1 beschrieben wurde, weist die Ausrückeinheit 150 den Ausrückring 370 mit der Ausrückschneider 380 auf, die gegen die Membranfeder 240 durch das Vorspannfederelement 390 gedrückt wird. Hierdurch kann bei Betätigen der Ausrückeinheit 170, also bei Einleiten der Hydraulikflüssigkeit über den Hydraulikanschluss 280 in den Arbeitsraum 300 der Kolben 310 entlang der axialen Richtung verschoben werden, sodass die Ausrückschneide 380 bzw. der Ausrückring 370 die Membranfeder 240 derart deformiert oder mit ihr derart in Wechselwirkung tritt, dass diese nunmehr keine oder zumindest eine reduzierte Kraft auf den Abschnitt 540 des ersten Bauteils 430 ausübt. Somit wird auch die auf das Reibpaket 120 bzw. die Kupplungsscheibe 160 wirkende Antriebskraft reduziert, sodass die Drehmomentübertragung reduziert, wenn nicht unterbrochen wird.

Wie bereits zuvor erläutert, umfasst die Ausrückeinheit 150 die typischerweise schwach ausgelegte Vorlastfeder bzw. Vorspannfeder (Vorspannfederelement 390), welche den Kolben 310 und damit die Ausrückschneide 380 stets gegen die Membranfederzungen drückt. Bei der zuvor beschriebenen Druckbeaufschlagung des Arbeitsraums 300 wird der Kolben 310 somit gegen die Membranfeder 240 gedrückt und die Kupplung 100 ausgerückt. Die Ausrückeinheit 150 und ihre Vorspannfeder 390 sind somit derart ausgebildet, dass die Ausrückeinheit 150 stets mit dem anpresskrafterzeugenden Element 230 derart in Kontakt steht, dass die Ausrückeinheit 150 die mechanische Verbindung zeitlich unmittelbar, also ohne Überbrückung eines signifikanten Spiels, zwischen der Kupplungsscheibe 160 und der Fliehkrafteinheit 130 trennbar macht. Die Fliehkrafteinheit 130 ist hierbei derart ausgebildet, dass diese in einem verschleißfreien Zustand stets mit dem anpresskrafterzeugenden Element 230 in Kontakt steht. Hierdurch kann ein Anfahrverhalten bzw. ein Einkuppelverhalten der Kupplung 100 gegebenenfalls dadurch verbessert werden, dass nicht zuerst ein Spiel oder ein anderer Totraum von der Fliehkrafteinheit 130 während der Vergrößerung des Abstands entlang der axialen Richtung 110 überbrückt werden muss.

Die Ausrückeinheit 150 ist hierbei also insgesamt derart angeordnet und ausgebildet, dass diese eine von dem anpresskrafterzeugenden Element 230 ausgeübte Kraft oder Anpresskraft unterdrückbar oder reduzierbar macht, sodass die mechanische Verbindung zwischen der Kupplungsscheibe 160 und der Fliehkrafteinheit 130 trennbar ist.

Bevor im Zusammenhang mit Fig. 3 die Ausgestaltung der Laufbahn und der Gegenlaufbahn näher beschrieben wird, sollte an dieser Stelle erwähnt werden, dass es sich bei der Fliehkrafteinheit 130, wie sie in den Fig. 1 und 2 gezeigt ist, um eine solche für eine Kupplung 100 handelt, die in einem Umfeld eingesetzt wird, in dem der axiale Bauraum, also der Bauraum entlang der axialen Richtung 110 beschränkt ist. Gegenüber beispielsweise einer konventionellen Druckplatte sind so die Fliehkraftkörper 490 bei der hier gezeigten Ausführungsform zumindest in einem Betriebszustand wenigstens teilweise in radialer Richtung außerhalb der Kupplungsscheibe 160 angeordnet. Anders ausgedrückt sind die zusätzlichen Komponenten der Fliehkrafteinheit 130, die für das Einkuppeln bei Rotation derselben verantwortlich sind, radial benachbart zu der Kupplungsscheibe 160 bzw. dem Reibpaket 120 angeordnet. Im Vergleich zu einer konventionellen Druckplatte benötigt diese Konstruktion folglich zusätzlichen Bauraum in radialer Richtung. Eine solche Anordnung kann beispielsweise im Zusammenhang mit einem Kleinwagen oder einem anderen Kraftfahrzeug sinnvoll eingesetzt werden, bei dem aufgrund eines quer eingebauten Motors und/oder Getriebes der axiale Bauraum beschränkt ist. Selbstverständlich kann eine entsprechende Konstruktion auch bei anderen Anwendungsszenarien zum Einsatz kommen, bei denen ebenfalls der axiale Bauraum beschränkt ist.

Bei der in Fig. 1 und 2 gezeigten Kupplung 100 sind die entsprechenden Fliehkraftkörper 490 sogar bei allen Betriebszuständen wenigstens teilweise in radialer Richtung außerhalb der Kupplungsscheibe 160 angeordnet. Wird hierbei eine gegebenenfalls auftretende Versetzung in axialer Richtung 110 nicht berücksichtigt, sind bei der hier gezeigten Ausführungsform die Fliehkraftkörper 490 sogar bei allen Betriebszuständen vollständig in radialer Richtung außerhalb der Kupplungsscheibe 160 angeordnet, da die in den Fig. 1 und 2 gezeigte Positionierung der Fliehkraftkörper 490 der Ruhestellung entspricht, also ihrem kleinsten radialen Abstand.

Im Unterschied hierzu kann bei anderen Fliehkrafteinheiten 130 bzw. entsprechenden anderen Kupplung 100 gemäß einem Ausführungsbeispiel der oder die Fliehkraftkörper 490 unter allen Betriebszuständen nicht oder um nicht mehr als einen größten Radius des Fliehkraftkörpers 490 über die Kupplungsscheibe 160 in radialer Richtung hervorstehen. In einem solchen Fall werden also die zusätzlichen Komponenten der Fliehkrafteinheit 130 gegenüber einer konventionellen Druckplatte in axialer Richtung angeordnet. Hierdurch kann radialer Bauraum im Vergleich zu der in Fig. 1 und 2 gezeigten Anordnung gespart werden, was beispielsweise im Sportwagenbereich bzw. im Rennsportbereich sinnvoll sein kann.

Fig. 3 zeigt eine Teilvergrößerung der Fliehkrafteinheit 130 im Bereich eines Fliehkraftkörpers 490. Wie bereits zuvor erläutert wurde, weisen das erste Bauteil 430 eine Laufbahn 560 und das zweite Bauteil 440 eine Gegenlaufbahn 570 auf. Der Fliehkraftkörper 490 kann hierbei mit dem ersten Teilkörper 500, also der größeren der beiden Rollen an der Laufbahn 560 entlangrollen, während der zweite Teilkörper 510 mit der Gegenlaufbahn 570 in Kontakt steht und an dieser entlangrollen kann.

Das zweite Bauteil 440, also das Unterteil, weist hierbei zwei ineinander übergehende Schrägen auf, die Teil der Gegenlaufbahn 570 sind. Genauer gesagt weist die Gegenlaufbahn 570 einen unter einem ersten Winkel verlaufenden Abschnitt 580 und einen sich an diesen anschließenden weiteren Abschnitt 590 auf, der unter einem weiteren Winkel gegenüber der radialen Richtung 420 verläuft. Entsprechend weist auch die Laufbahn 560 einen Abschnitt 600 auf, der sich an einen weiteren Abschnitt 610 anschließt. Der Abschnitt 600 ist hierbei hinsichtlich der Berührpunkte der Fliehkraftkörper 490 während des Abrollens an der Laufbahn 560 bzw. der Gegenlaufbahn 570 dem Abschnitt 580 zugeordnet, während der weitere Abschnitt 610 dem weiteren Abschnitt 590 der Laufbahn 560 zugeordnet ist.

Der Abschnitt 600 und der weitere Abschnitt 610 weisen bei dem in Fig. 1 bis 3 gezeigten Ausführungsbeispiel einer Fliehkrafteinheit 130 jedoch keine unterschiedlichen Winkel auf. Genauer gesagt, weist die Laufbahn 430 des Oberteils bzw. des ersten Bauteils 430 in diesem Bereich eine plane Fläche auf, an der der Fliehkraftkörper 490 mit dem ersten Teilkörper 500 abrollen kann. Im Unterschied hierzu besitzt das zweite Bauteil 440, also das Unterteil rechteckförmige Aussparungen, in denen die Gegenlaufbahn 570 geführt ist, in denen also das wälz- oder gleitgelagerte Gewicht 490 geführt wird.

Der Abschnitt 580 der Gegenlaufbahn 570 und der Abschnitt 600 der Laufbahn 560 verlaufen in der axialen Richtung 110 schräg zueinander. Hierbei nähern sich der Abschnitt 580 der Gegenlaufbahn 570 und der Abschnitt 600 der Laufbahn 560 mit zunehmendem Abstand von der axialen Richtung 110 einander, laufen also aufeinander zu. Diese schließen hierbei einen Winkel A miteinander ein, der typischerweise größer ist als ein Winkel B den der weitere Abschnitt 590 der Gegenlaufbahn 570 und der weitere Abschnitt 610 der Laufbahn 560 miteinander einschließen. Das Verhältnis des Winkels der Abschnitte 580 und 600 zu dem zweiten Winkel der weiteren Abschnitte 590, 610 beträgt hierbei typischerweise wenigstens 3:1. Häufig kann ergänzend oder alternativ hierzu der Winkel zwischen den Abschnitten 580, 600 wenigstens 20° betragen. Alternativ oder ergänzend hierzu kann der Winkel zwischen den weiteren Abschnitten 590, 610 typischerweise höchstens 10° betragen. Durch die Wahl dieser Winkelverhältnisse kann so einerseits bei einem Anfahren, also bei einer Erhöhung der Drehzahl der Fliehkrafteinheit 130 zu Beginn ein schneller Anstieg des Abstands des ersten Bauteils 430 von dem zweiten Bauteil 440 erreicht werden, während bei einem Überschreiten einer weiteren Grenzdrehzahl, wenn der oder die Fliehkraftkörper 490 die Abschnitte 580, 600 verlassen und in die weiteren Abschnitte 590, 610 eintreten, eine weitere Vergrößerung des Abstands reduziert werden. So beträgt beispielweise bei einem Ausführungsbeispiel der Winkel A 36°, der Winkel B 7,5°.

Ebenso ermöglicht die Verwendung eines Abschnitts und eines weiteren Abschnitts mit unterschiedlichen Steigungen im Rahmen der Laufbahn 560 und der Gegenlaufbahn 570 ebenfalls eine Hysterese im Hinblick auf das übertragbare Drehmoment bzw. die wirkende Anpresskraft als Funktion der Drehzahl der Fliehkrafteinheit 130. Aufgrund der unterschiedlichen Winkelverhältnisse in den Abschnitten 580, 600 im Vergleich zu den weiteren Abschnitten 590, 610 wird so eine typischerweise höhere Einkuppeldrehzahl benötigt, bei der der oder die Fliehkraftkörper 490 sich soweit entlang des Abschnitts 580 bzw. des Abschnitts 600 bewegt haben, dass der Abstand der beiden Bauteile 430, 440 derart gewachsen ist, dass durch die durch die Membranfeder 240 oder das anpresskrafterzeugende Element 230 erzeugte Anpresskraft entlang der axialen Richtung 110 eine ausreichende Drehmomentübertragung ermöglicht, um das Kraftfahrzeug zu beschleunigen. Wird während dieser Phase, in der also die Drehzahl der Fliehkrafteinheit 130 noch nicht ausgereicht hat, um den oder die Fliehkraftkörper 490 in die weiteren Abschnitt 590, 610 sich bewegen zu lassen, wieder unterbrochen, sorgt primär die von dem Rückstellfederelement 450 bewirkte Kraft auf das erste und zweite Bauteil 430, 440 ein Zurückrollen der Fliehkraftkörper 490 und somit eine Verringerung des Abstands der beiden Bauteile zueinander. Dies führt wiederum zu einer Reduzierung bzw. Unterbrechung der Anpresskraft, sodass die Kupplung 100 wieder trennt.

Ist hingegen erst einmal der oder die Fliehkraftkörper 490 in die weiteren Abschnitt 590, 610 vorgedrungen, unterliegen sie dort einer geringeren Steigung und damit Hangabtriebskraft, die hervorgerufen durch die Rückstellfederelemente 450 erst bei einer niedrigeren Auskuppeldrehzahl zu einem Zurückrollen der Fliehkraftkörper 490 in die in Fig. 3 gezeigte Ruhestellung bewirkt. Anders ausgedrückt kehrt der oder kehren die Fliehkraftkörper 490 erst bei Unterschreiten einer typischerweise niedrigeren Auskuppeldrehzahl in die Ruhestellung zurück, was mit einem Zurückfallen des Abstands des ersten Bauteils 430 zu dem zweiten Bauteil 440 in den Ruhewert einhergeht. Typischerweise existiert daher ein Drehzahlbereich, in dem es von der Vorgeschichte abhängt, ob die Kupplung 100 eingekuppelt ist oder ausgekuppelt ist, ob also die Fliehkrafteinheit 130 einen großen oder kleinen Abstand der beiden Bauteile 430, 440 zueinander aufweist.

Die Fliehkrafteinheit 130 weist bezüglich der Gegenlaufban 570 ferner einen äu-βeren radialen Anschlag 620 sowie einen inneren radialen Anschlag 630 auf, die eine Bewegung des oder der Fliehkraftkörper 490 auf einen maximalen bzw. einen minimalen Abstandswert von der axialen Richtung 110 her begrenzen. Der äußere radiale Anschlag 620, der auch einfach nur als äußerer Anschlag bezeichnet wird, begrenzt hierbei im Zusammenspiel mit der Steigung der entsprechenden Laufbahn 560 bzw. Gegenlaufbahn 570 einen maximalen Abstandswert der beiden Bauteile 430, 440 zueinander. Hierdurch kann einerseits eine Anpresskraft, die von dem anpresskrafterzeugenden Element 230, also beispielsweise der Membranfeder 240 hervorgerufen wird, beschränkt werden, es kann jedoch ebenso eine Deformation dieser Komponenten und damit ihre mechanische Belastung beschränkt werden. Insbesondere kann hierdurch gegebenenfalls ein maximal übertragbares Drehmoment beschränkt werden, sodass auch bei hohen Drehzahlen der Fliehkrafteinheit 130 bzw. der Kupplung 100 nicht unkontrolliert hohe Drehmomente übertragen werden können.

Der innere radiale Anschlag 630 kann hierbei beispielsweise derart angeordnet werden, dass dieser dafür sorgt, dass der oder die Fliehkraftkörper 490 bei dem Stillstand der Fliehkrafteinheit 130 bereits mit den Abschnitten 580, 600 der Laufbahn 560 und der Gegenlaufbahn 570 in Kontakt stehen. Hierdurch kann gegebenenfalls ein schnelleres Ansprechen der Fliehkrafteinheit 130 und/oder eine Komfortverbesserung erzielt werden, da die Fliehkraftkörper 490 auch bei einem Start der Fliehkrafteinheit 130 bereits in einer definierten Position sich befinden. Hierdurch kann gegebenenfalls eine Geräuschentwicklung aus der Kupplung 100 reduziert werden.

Selbstverständlich können die entsprechenden Anschläge 620, 630 auch zusätzlich oder ergänzend im Rahmen der Laufbahn 560 implementiert werden. Hierbei können selbst bei einer Implementierung derselben im Rahmen der Gegenlaufbahn 570 diese als Teil des ersten Bauteils 430 bzw. umgekehrt im Falle einer Implementierung im Rahmen der Laufbahn 560 als Teil des zweiten Bauteils 440 implementiert werden. Hierbei kommt es darauf an, welcher der entsprechenden Teilkörper 500, 510 des Fliehkraftkörpers 490 mit den betreffenden Anschlägen 620, 630 in Wechselwirkung tritt.

Die Anschläge 620, 630 begrenzen so den Weg, den die Gewichte bzw. Fliehkraftkörper 490 entlang der schrägen radial nach außen verfahren können. Anders ausgedrückt weist der Fliehkraftkörper 490 also den ersten Teilkörper (Außenring) auf, welcher gegen die plane Fläche, die die Laufbahn 560 bildet, läuft, und dessen radialer Weg durch die Anschläge 620 und 630 begrenzt wird. Der Fliehkraftkörper 490 (Gewicht) verfügt ferner über den gegenüber dem ersten Teilkörper 500 wälz- oder gleitgelagerten zweiten Teilkörper 510, bei dem es sich beispielsweise um eine Achse handeln kann, welche auf den schrägen bzw. dem Abschnitt 580 und dem weiteren Abschnitt 590 der Gegenlaufbahn 570 abrollt.

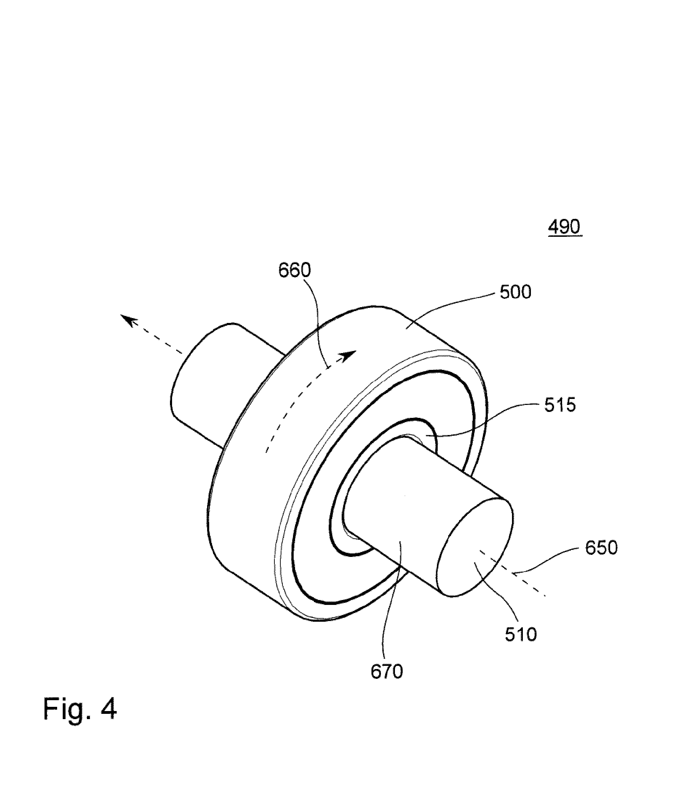

Fig. 4 zeigt so eine vergrößerte, perspektivische Darstellung eines Fliehkraftkörpers 490, wie er bei der zuvor gezeigten Fliehkrafteinheit 130 gemäß einem Ausführungsbeispiel mehrfach zum Einsatz kommt. Seine Teilkörper 500 und 510 sind über das Wälzlager 515 zueinander drehbar gelagert sind. Der erste Teilkörper 500 ist hier walzenförmig mit einer zylindermantelförmigen äußeren Lauffläche 640 ausgestaltet, die mit der Laufbahn 560 des ersten Bauteils 430 in Kontakt steht. Die äußere Lauffläche 640 erstreckt sich hierbei parallel zu einer axialen Richtung 650 und einer Umfangsrichtung 660 des ersten Teilkörpers 500.

Der hier gezeigte erste Teilkörper 500 weist ferner in radialer Richtung, also senkrecht zu der axialen Richtung 650 und der Umfangsrichtung 660 eine an beiden Seiten des ersten Teilkörpers 500 vorgesehene Ausnehmung 670 auf, durch die beispielsweise eine Fläche, an der der erste Teilkörper 500 gegebenenfalls das zweite Bauteil 440 berühren könnte, reduziert werden kann.

Der erste Teilkörper 500 weist ferner eine zu der axialen Richtung 650 zentral verlaufende Bohrung auf, in die das Wälzlager 515 eingesetzt ist, sodass diese über seinen Außenring mit dem ersten Teilkörper verbunden ist. Das Wälzlager 515 ermöglicht so eine Drehbewegung des ersten Teilkörpers 500 zu dem zweiten Teilkörper 510 um die axiale Richtung 650 herum. Bei dem Wälzlager 515 handelt es sich genauer gesagt um ein gekapseltes Nadellager, das eine besonders kompakte Bauweise ermöglicht und einen Schutz vor einem Eindringen von festen und flüssigen Verunreinigungen bietet.

Ein Innenring des Wälzlagers 515 ist mit dem zweiten Teilkörper 510 verbunden. Dieser ist als Zylinder ausgeführt und kann als Achse des ersten Teilkörper 500 betrachtet werden. Der zweite Teilkörper 510 überragt hierbei den ersten Teilkörper 500 in axialer Richtung 650, sodass der zweite Teilkörper 510 im Bereich dieses Überhangs an der Gegenlaufbahn des zweiten Bauteils 440 der Fliehkrafteinheit 130 entlang laufen kann, mit dieser also im Bereich seines Überhangs in Kontakt stehen kann. So weist auch der zweite Teilkörper eine parallel zu der äußeren Lauffläche 640 des ersten Teilkörpers 500 orientierte äußere Lauffläche 670 auf, die mit der Gegenlaufbahn 570 des zweiten Bauteils 440 der Fliehkrafteinheit 130 in Kontakt steht.

Selbstverständlich kann anstelle des Wälzlagers 515 auch ein Gleitlager bei anderen Ausführungsbeispielen zum Einsatz kommen.

Hinsichtlich der Funktion der Kupplung 100 bzw. der Fliehkrafteinheit 130 bietet es sich an, verschiedene Betriebszustände zu unterscheiden. Ist der Motor aus oder liegt lediglich die Leerlaufdrehzahl an, bewirkt die Fliehkraft, die auch die Fliehkraftkörper bzw. Gewichte einwirkt über die Abschnitte 580, 600 der Laufbahn 560 und der Gegenlaufbahn 570, also über die steile Rampe mit dem Winkel A eine Axialkraft, welche jedoch kleiner ist als eine von den vorgespannten Schraubenfedern 460 der Rückstellfederelemente 450 bewirkte Kraft. Hierdurch werden das erste und das zweite Bauteil bei ihrem Ruhewert hinsichtlich ihres Abstands zueinander, also beispielsweise vollständig aufeinander gehalten. Die Fliehkrafteinheit 130 kann hier durch einige der Schraubenfedern 460 gegen die Membranfeder 240 gedrückt werden. Sie fungieren hier als Abhubfedern. Aufgrund der beschriebenen Kraftverhältnisse wird jedoch keine Kraft auf das Reibpaket 120 bzw. auf die Kupplungsscheibe 160 ausgeübt, sodass die Kupplung 100 kein oder zumindest kein relevantes Moment überträgt.

Wird bei einem Anfahren eine Einkuppeldrehzahl erreicht, also eine Drehzahl, die höher als der Leerlauf bzw. die Leerlaufdrehzahl ist, überkommt die Axialkraft, die auf die Fliehgewichte bzw. Fliehkraftkörper 490 wirkt, die Kraft der Schraubenfedern 460 der Rückstellfederelemente 450. Das erste Bauteil 430 (Oberteil) drückt gegen die vorgespannte Membranfeder 240 und bleibt dadurch axial weitgehend ortsfest. Das zweite Bauteil 440 (Unterteil) bewegt sich in Richtung Reibpaket 120 und übt eine Kraft aus, die das zum Anfahren erforderliche Drehmoment hervorruft bzw. überträgt.

Bei einer weiteren Drehzahlerhöhung tritt dann eine "Verrastung" der Kupplung 100 auf. Wird die Drehzahl weiter erhöht, so übersteigt die Axialkraft, die auf die Fliehkraftkörper 490 wirkt, die Kräfte der Schraubenfedern 490 der Rückstallfederelemente 450 und die Kraft der vorgespannten Membranfeder 240. Das erste Bauteil 430 (Oberteil) drückt die Membranfeder 240 weg. Hierdurch entsteht zwischen dem ersten und dem zweiten Bauteil 430, 440 ein größerer Abstand, sodass das oder die Fliehkraftkörper 490 von der steileren Rampe mit dem Winkle A, also von den Abschnitten 580, 600 auf die flachere Rampe mit dem Winkel B also die weiteren Abschnitte 590, 610, rollen können, bis das oder die Fliehkraftkörper 490 den äußeren radialen Anschlag 620 erreichen. Die beiden Bauteile 430, 440 sind nun maximal auseinandergedrückt und können sich nicht noch weiter voneinander entfernen. Dieses Verhalten wird auch bei einer weiteren Erhöhung der Drehzahl bis zu einer maximal zulässigen Maximaldrehzahl nicht geändert.

Durch die Membranfeder 240 wird auch praktischerweise die Anpresskraft der Kupplung 100 begrenzt anstatt einer bis zur maximalen Drehzahl immer weiter im Wesentlichen quadratisch zunehmenden Anpresskraft. Das Gehäuse, also der Gehäusekorb 140 und die Wälzlager bzw. Fliehkraftkörper 490 können einfacher dimensioniert werden und auch das maximal übertragbare Drehmoment wird zum Schutz des Antriebsstrangs und seiner weiteren Komponenten begrenzt.

Kommt es zu einer Drehzahlabsenkung unter die Einkuppeldrehzahl, aber über die Leerlaufdrehzahl, wird also die Drehzahl wieder reduziert, so werden die Fliehkraftkörper 490 erste bei einer deutlich niedrigeren Drehzahl wieder in ihre in Fig. 2 und 3 gezeigte Position zurückgedrückt, da auf der flacheren Rampe mit dem kleineren Winkle B eine deutlich geringere Hangabtriebskraft auf die Gewichte bzw. Fliehkraftkörper 490 wirkt. Bis zu diesem Zeitpunkt steht die volle Anpresskraft der Membranfeder 240 auf das Reibpaket 120 zur Verfügung, wodurch ein Rutschen der Kupplung 100 selbst bei einer untertourigen Fahrweise vermieden bzw. eine entsprechende Wahrscheinlichkeit reduziert wird.

Bei einer weiteren Drehzahlabsenkung bis auf Leerlaufdrehzahlen kommt es dann zu einem automatischen Auskuppeln. Wird nun die Fliehkraft durch eine Reduzierung der Drehzahl der Fliehkrafteinheit 130 auf die Fliehkraftkörper 490 so gering, dass sie auch auf der flacheren Rampe mit dem Winkel B, die durch die weiteren Abschnitte 590 und 610 gebildet wird, kleiner als die Hangabtriebskräfte, die nicht zuletzt auch durch die Rückstellfederelemente 450 hervorgerufen wird, können die Gewichte von der Rampe B zurückrollen und sofort auch die Rampe mit dem Winkle A durcheilen, bis sie auf ihren inneren radialen Anschlag (Endanschlag) 630 treffen. Hierbei wird die Hangabtriebskraft nicht nur durch die Schraubenfederkraft 460 der Rückstellfederelemente 450, sondern auch durch die Membranfeder 240 erzeugt und hervorgerufen.

Unabhängig von der Drehzahlabhängigkeit des Ein- bzw. Auskuppelns der Kupplung 100 durch die Fliehkrafteinheit 130, ermöglicht der Einsatz einer Kupplung 100 mit einer Fliehkrafteinheit 130 gemäß einem Ausführungsbeispiel auch ein manuelle auskuppeln. So folgt in jedem Betriebszustand der Kupplung 100 die Ausrückeinheit 150 (Ausrücker) durch seine Vorlast- bzw. Vorspannfeder den Federzungen der Membranfeder 240. Die Ausrückeinheit 150 kann das hierzu notwendige Hydraulikvolumen beispielsweise über eine Schnüffelbohrung des Geberzylinders aus einem Ausgleichsbehälter holen bzw. in diesen wieder abgeben. Somit kann in jedem Betriebszustand durch ein Drücken der Membranfeder 240 dem ersten Bauteil 430 (Oberteil) seine "Abstützung" entzogen werden, wodurch es zu einer Unterbrechung der Anpresskraft und damit zu einer Unterbrechung der Übertragung des Drehmoments kommt.

Da die Ausdehnung der Fliehkrafteinheit 130 in axialer Richtung 110 aufgrund der zuvor beschriebenen Konstruktion begrenzt ist, entsteht bei ausreichend ausgerückter Membranfeder 240 ein vollständiger Abhub, der zu einer momentanen Unterbrechung führt. Die Ausrückkraft ist hierbei im Wesentlichen nicht drehzahlabhängig. Es kann jedoch dazu kommen, dass der notwendige Ausrückweg von der momentanen Stellung der Membranfeder 240, also von der jeweiligen Drehzahl abhängig sein kann. Damit die Membranfeder 240 hierbei nicht zu stark gedrückt bzw. überlastet werden kann, kann an dem Gehäusekorb 140 im Bereich des Außenumfangs der Membranfeder 240 ein entsprechender Anschlag vorgesehen werden.

Die Verwendung der Abschnitte 580, 600 und der weiteren Abschnitt 590, 610 mit unterschiedlichen Winkeln, also die Verwendung von geknickten Rampen kann hierbei einen stets gleichen Ausrückweg ermöglichen, wenn die Kupplung einmal nach einem Anfahren über die Verrastdrehzahl beschleunigt wurde. Die Kupplung 100 gemäß einem Ausführungsbeispiel und/oder die Fliehkrafteinheit 130 gemäß einem Ausführungsbeispiel ermöglicht so auch einen Gangwechsel, also ein Auskuppeln bzw. Trennen der Kupplung. Auch ist die Ausrückkraft aufgrund der Verwendung der Membranfeder 240 bzw. eines anderen anpresskraftbegrenzenden Elements 230 in vielen Fällen drehzahlunabhängig. Ebenfalls durch Einbeziehung des anpresskrafterzeugenden Elements 230 steigt die Anpresskraft typischerweise nicht quadratisch mit der Drehzahl und die Anpresskraft kann hinsichtlich der erreichbaren Werte nach oben begrenzt werden. Hierdurch kann gegebenenfalls eine Überlastung des Antriebsstrangs oder seiner Komponenten vermieden werden.

Ebenso können die Einkuppeldrehzahl und die Auskuppeldrehzahl unterschiedlich gesetzt werden. Auch kann bei einer Kupplung 100 gemäß einem Ausführungsbeispiel selbst bei untertouriger Fahrweise ein Rutschen derselben vermieden werden.

Die Kupplung 100 gemäß einem Ausführungsbeispiel stellt so eine Fliehkraftkupplung mit einer Fremdbetätigungsmöglichkeit und einer Anpresskraftbegrenzung dar, die durch ein automatisches Einkoppeln den Fahrer eines Kraftfahrzeugs entlasten kann, ohne auf eine elektromechanische Aktuatorik zurückgreifen zu müssen.

Auch wenn zuvor die Kupplung 100 ausschließlich im Zusammenhang mit der Membranfeder 240 beschrieben wurde, können auch andere Federtypen im Rahmen von Ausführungsbeispielen einer Kupplung 100 zum Einsatz kommen. So kann beispielsweise die Membranfeder 240 gegen eine Tellerfeder ausgetauscht werden. Auch andere anpresskrafterzeugende Elemente 230, beispielsweise auf Basis einer oder mehrerer Schraubenfedern, Gasdruckfedern oder anderer pneumatischer oder elastischer Federelemente können hier zum Einsatz kommen. Gegebenenfalls kann hier eine zusätzliche mechanische Implementierung einer Anpresskraftreduzierung oder Unterbrechung notwendig oder ratsam sein. Aber auch die Rückstellfederelemente 450 können beispielsweise auf Basis von Zugfedern, Tellerfedern oder anderer pneumatischer oder elastischer Federelemente implementiert werden.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

### Bezugszeichen

| | |
|---|---|
| 100 | Kupplung |
| 110 | axiale Richtung |
| 120 | Reibpaket |
| 130 | Fliehkrafteinheit |
| 140 | Gehäusekorb |
| 150 | Ausrückeinheit |
| 160 | Kupplungsscheibe |
| 170 | Innenlamelle |
| 180 | Nabe |
| 190 | Außenlamelle |
| 200 | stabförmiges Element |
| 210 | Ausnehmung |
| 220 | Bohrung |
| 230 | anpresskrafterzeugendes Element |
| 240 | Membranfeder |
| 250 | Kippring |
| 260 | Befestigungsring |
| 270 | Gehäuse |
| 280 | Hydraulikanschluss |
| 290 | Ausnehmung |
| 300 | Arbeitsraum |
| 310 | Kolben |
| 320 | Nute |
| 330 | Dichtelement |
| 340 | Außenring |
| 350 | Wälzlager |
| 360 | Innenring |
| 370 | Ausrückring |
| 380 | Ausrückschneide |
| 390 | Vorspannfederelement |
| 400 | Nute |
| 410 | Nute |
| 420 | radiale Richtung |
| 430 | erstes Bauteil |
| 440 | zweites Bauteil |
| 450 | Rückstellfederelement |
| 460 | Schraubenfeder |
| 470 | Schraube |
| 480 | Auflagebauteil |
| 490 | Fliehkraftkörper |
| 500 | erster Teilkörper |
| 510 | zweiter Teilkörper |
| 515 | Wälzlager |
| 520 | Anpressfläche |
| 530 | Anschlag |
| 540 | Abschnitt |
| 550 | Schneide |
| 560 | Laufbahn |
| 570 | Gegenlaufbahn |
| 580 | Abschnitt |
| 590 | weiterer Abschnitt |
| 600 | Abschnitt |
| 610 | weiterer Abschnitt |
| 620 | äußerer radialer Anschlag |
| 630 | innerer radialer Anschlag |
| 640 | äußere Lauffläche |
| 650 | axiale Richtung |
| 660 | Umfangsrichtung |
| 670 | äußere Lauffläche |

## Patentansprüche

1. Fliehkrafteinheit (130) für eine Kupplung (100) eines Kraftfahrzeugs, mit folgenden Merkmalen:
• einem ersten Bauteil (430);
• einem zweiten Bauteil (440), das bezogen auf eine axiale Richtung (110) drehfest mit dem ersten Bauteil (430) gekoppelt ist, wobei das erste Bauteil (430) und das zweite Bauteil (440) derart ausgebildet sind, dass sich ein Abstand zwischen dem ersten Bauteil (430) und dem zweiten Bauteil (440)entlang der axialen Richtung (110) bei Überschreiten einer Grenzdrehzahl ausgehend von einem Ruhewert bei einem Stillstand der Fliehkrafteinheit (130) vergrößert; und
• ein Rückstellfederelement (450), das eine Kraft zwischen dem ersten Bauteil (430) und dem zweiten Bauteil (440) derart bewirkt, dass der Abstand zwischen dem ersten Bauteil (430) und dem zweiten Bauteil (440) bei dem Stillstand der Fliehkrafteinheit (130) den Ruhewert annimmt,
wobei das zweite Bauteil (440) ausgebildet ist, um mit einer Kupplungsscheibe (160) der Kupplung (100) eine mechanische Verbindung zur Übertragung eines Drehmoments zu schaffen, wobei das erste Bauteil (430) ausgebildet ist, um mit einem anpresskrafterzeugenden Element (230) der Kupplung (100) in Kontakt zu stehen oder in Kontakt gebracht zu werden, sodass durch die Vergrößerung des Abstands zwischen dem ersten Bauteil (430) und dem zweiten Bauteil (440) durch das anpresskrafterzeugende Element (230) die mechanische Verbindung zu der Kupplungsscheibe (160) geschaffen oder verstärkt wird.

2. Fliehkrafteinheit (130) nach Anspruch 1, bei der das erste Bauteil (430) und das zweite Bauteil (440) ferner derart ausgebildet sind, dass sich der Abstand zwischen dem ersten Bauteil (430) und dem zweiten Bauteil (440) entlang der axialen Richtung (110) bei einem Überschreiten einer weiteren Grenzdrehzahl bei einer weiter steigenden Drehzahl weniger stark vergrößert.

3. Fliehkrafteinheit (130) nach einem der vorhergehenden Ansprüche, bei der das erste Bauteil (430) eine Laufbahn (560) und das zweite Bauteil (440) eine Gegenlaufbahn (570) für einen Fliehkraftkörper (490) aufweisen, wobei die Laufbahn (560) und die Gegenlaufbahn (570) sich entlang einer radialen Richtung (420) an dem ersten Bauteil (430) und dem zweiten Bauteil (440) erstrecken, wobei die Laufbahn (560) und die Gegenlaufbahn (570) jeweils einen Abschnitt (580, 600) aufweisen, die in Richtung der axialen Richtung (110) schräg zueinander verlaufen, wobei der Abschnitt (600) der Laufbahn (560) und der Abschnitt (580) der Gegenlaufbahn (570) mit zunehmendem Abstand von der axialen Richtung (110) aufeinander zulaufen, und wobei der Fliehkraftkörper (490) ausgebildet ist, um sich bei einer Drehung der Fliehkrafteinheit (130) um die axiale Richtung (110) aufgrund einer auf ihn einwirkenden Fliehkraft entlang der Laufbahn (560) und der Gegenlaufbahn (570) zu bewegen.

4. Fliehkrafteinheit (130) nach Anspruch 3, bei dem die Laufbahn (560) und die Gegenlaufbahn (570) ferner jeweils einen weiteren Abschnitt (590, 610) aufweisen, die entlang der radialen Richtung (420) mit wachsendem Abstand zu der axialen Richtung (110) hinter den Abschnitten (580, 600) der Laufbahn (560) und der Gegenlaufbahn (570) angeordnet sind, wobei die weiteren Abschnitte (590, 610) der Laufbahn (560) und der Gegenlaufbahn (570) schräg zueinander mit einem kleineren Winkel als die Abschnitte (580, 600) der Laufbahn (560) und der Gegenlaufbahn (570) zueinander verlaufen, und wobei der weitere Abschnitt (610) der Laufbahn (560) und der weitere Abschnitt (590) der Gegenlaufbahn (570) mit zunehmendem Abstand von der axialen Richtung (110) aufeinander zulaufen.

5. Fliehkrafteinheit (130) nach Anspruch 4, bei der ein Verhältnis der Winkel zwischen den Abschnitten (580, 600) und den weiteren Abschnitten (590, 610) der Laufbahn (560) und der Gegenlaufbahn (570) wenigstens 3:1 und/oder der Winkel zwischen den weiteren Abschnitten (590, 610) der Laufbahn (560) und der Gegenlaufbahn (570) höchstens 10° und/oder der Winkel zwischen den Abschnitten (580, 600) der Laufbahn (560) und der Gegenlaufbahn (570) wenigstens 20° beträgt.

6. Fliehkrafteinheit (130) nach einem der Ansprüche 3 bis 5, bei der die Laufbahn (560) und/oder die Gegenlaufbahn (570) einen äußeren radialen Anschlag (620) aufweist, der eine Bewegung des Fliehkraftkörpers (490) entlang der radialen Richtung (420) auf einen maximalen Abstandswert von der axialen Richtung (110) begrenzt.

7. Fliehkrafteinheit (130) nach einem der Ansprüche 3 bis 6, bei der die Laufbahn (560) und/oder die Gegenlaufbahn (570) ferner einen inneren radialen Anschlag (630) aufweist, der eine Bewegung des Fliehkraftkörpers (490) entlang der radialen Richtung (420) auf einen minimalen Abstandswert zu der axialen Richtung (110) derart begrenzt, dass der Fliehkraftkörper (490) bei dem Stillstand der Fliehkrafteinheit (130) mit den Abschnitten (580, 600) der Laufbahn (560) und der Gegenlaufbahn (570) in Kontakt steht.

8. Fliehkrafteinheit (130) nach einem der Ansprüche 3 bis 7, bei der der Fliehkraftkörper (490) einen ersten (500) und einen zweiten (510) im Wesentlichen rotationssymmetrischen Teilkörper umfasst, wobei der erste Teilkörper (500) mit der Laufbahn (560) und der zweite Teilkörper (510) mit der Gegenlaufbahn (570) in Kontakt stehen, und wobei der erste (500) und der zweite Teilkörper (510) zueinander über ein Gleitlager oder über ein Wälzlager (515), beispielsweise ein Nadellager, zueinander gelagert sind.

9. Fliehkrafteinheit (130) nach einem der Ansprüche 3 bis 8, bei der der Fliehkraftkörper (490) bei einem Betriebszustand wenigstens teilweise in radialer Richtung (420) außerhalb der Kupplungsscheibe (160) angeordnet ist.

10. Fliehkrafteinheit (130) nach einem der Ansprüche 3 bis 8, bei der der Fliehkraftkörper (490) unter allen Betriebszuständen nicht oder um nicht mehr als einen größten Radius des Fliehkraftkörpers (490) über die Kupplungsscheibe (160) in radialer Richtung (420) hervorsteht.

11. Fliehkrafteinheit (130) nach einem der vorhergehenden Ansprüche, die derart ausgebildet ist, dass sie in einen Gehäusekorb (140) mit einem anpresskrafterzeugenden Element (230) einsetzbar ist, das so ausgebildet ist, dass bei der Vergrößerung des Abstands des ersten Bauteils (430) von dem zweiten Bauteil (440) der Fliehkrafteinheit (130) eine Anpresskraft entlang der axialen Richtung (110) auf die Fliehkrafteinheit (130) und die Kupplungsscheibe (160) ausgeübt wird, sodass das Drehmoment übertragbar ist.

12. Kupplung (100) für ein Kraftfahrzeug mit folgenden Merkmalen:
• einer Kupplungsscheibe (160);
• einer Fliehkrafteinheit (130) gemäß einem der vorhergehenden Ansprüche;
• einem anpresskrafterzeugenden Element (230), das so ausgebildet ist, dass bei der Vergrößerung des Abstands des ersten Bauteils (430) von dem zweiten Bauteil (440) der Fliehkrafteinheit (130) eine Anpresskraft entlang der axialen Richtung (110) auf die Fliehkrafteinheit (130) und die Kupplungsscheibe (160) ausgeübt wird, sodass das Drehmoment übertragbar ist;
• inem Gehäusekorb (140), der mit dem anpresskrafterzeugenden Element (230) und der Fliehkrafteinheit (130) drehfest verbunden ist; und
• einer Ausrückeinheit (150), die derart angeordnet und ausgebildet ist, sodass durch die Ausrückeinheit (150) eine von dem anpresskrafterzeugenden Element (230) ausgeübte Anpresskraft unterdrückbar oder verminderbar ist, sodass die mechanische Verbindung zwischen der Kupplungsscheibe (160) und der Fliehkrafteinheit (130) trennbar ist.

13. Kupplung (100) nach Anspruch 12, bei der die Fliehkrafteinheit (130) in einem verschleißfreien Zustand stets mit dem anpresskrafterzeugenden Element (230) in Kontakt steht.

14. Kupplung (100) nach einem der Ansprüche 12 oder 13, bei der das anpresskrafterzeugende Element (230) eine Teller- oder Membranfeder (240) umfasst, die in einem vorgespannten Zustand in dem Gehäusekorb (140) angeordnet ist.

15. Kupplung (100) nach einem der Ansprüche 12 bis 14, bei der die Ausrückeinheit (150) ein Vorspannfederelement (390) aufweist, das derart ausgebildet und angeordnet ist, dass die Ausrückeinheit (150) stets mit dem anpresskrafterzeugenden Element (230) derart in Kontakt steht, sodass die Ausrückeinheit (150) die mechanische Verbindung im Wesentlichen zeitlich unmittelbar zwischen der Kupplungsscheibe (160) und der Fliehkrafteinheit (130) trennbar macht.
